# EUROPÄISCHE PATENTSCHRIFT

(11) **EP 4 165 375 B1**
(45) Veröffentlichungstag und Bekanntmachung des Hinweises auf die Patenterteilung: **24.12.2025**
(21) Anmeldenummer: 21733758.3
(22) Anmeldetag: 11.06.2021
(51) Int. Cl.: G01C 21/30, G06F 16/29, G06V 20/56

(54) **VERFAHREN ZUR BESTIMMUNG EINER NUTZUNGSART EINES LANDMARKENMUSTERS FÜR EINE EIGENLOKALISIERUNG EINES FAHRZEUGS, SOWIE ELEKTRONISCHES EIGENLOKALISIERUNGSSYSTEM FÜR EIN FAHRZEUG**
METHOD FOR DETERMINING A USAGE TYPE OF A LANDMARK PATTERN FOR A SELF-LOCALIZATION OF A VEHICLE, AND ELECTRONIC SELF-LOCALIZATION SYSTEM FOR A VEHICLE
PROCÉDÉ DE DÉTERMINATION D'UN TYPE D'UTILISATION D'UN MOTIF DE POINTS DE REPÈRE DESTINÉE À UNE LOCALISATION AUTONOME D'UN VÉHICULE, ET SYSTÈME DE LOCALISATION AUTONOME ÉLECTRONIQUE D'UN VÉHICULE

(30) Priorität: 15.06.2020 DE 102020115718
(43) Veröffentlichungstag der Anmeldung: 19.04.2023
(73) Patentinhaber: VOLKSWAGEN AKTIENGESELLSCHAFT, 38440 Wolfsburg (DE); MAN Truck & Bus SE, 80995 München (DE)
(72) Erfinder: BOHLKE, Henrik, 49456 Bakum (DE); WILBERS, Daniel, 38440 Wolfsburg (DE); RECH, Bernd, 38556 Bokensdorf (DE); MERFELS, Christian, 38102 Braunschweig (DE); KOCH, Niklas, 38448 Wolfsburg (DE); JÜRGENS, Stefan, 38106 Braunschweig (DE); HUNGAR, Constanze, 38100 Braunschweig (DE)
(74) Vertreter: Hofstetter, Schurack & Partner
(86) Internationale Anmeldenummer: PCT/EP2021/065789
(87) Internationale Veröffentlichungsnummer: WO 2021/254906

(56) Entgegenhaltungen:
- EP-A1- 3 232 159
- DE-A1- 102019 119 001
- SCHINDLER ANDREAS: "Vehicle self-localization with high-precision digital maps", 2013 IEEE INTELLIGENT VEHICLES SYMPOSIUM WORKSHOPS (IV WORKSHOPS), IEEE, 23 June 2013 (2013-06-23), pages 134 - 139, XP032491728, DOI: 10.1109/IV WORKSHOPS.2013.6615239

## Beschreibung

Ein Aspekt der Erfindung betrifft ein Verfahren zur Bestimmung einer Nutzungsart eines Landmarkenmusters für eine Eigenlokalisierung eines Fahrzeugs. Ein weiterer Aspekt der Erfindung betrifft ein elektronisches Eigenlokalisierungssystem für ein Fahrzeug.

Hochautomatisierte und autonome Fahrzeuge benötigen für die Navigation und Trajektorienplanung eine präzise Kenntnis ihrer eigenen Position. Für die Eigenlokalisierung von Fahrzeugen sind verschiedene Konzepte bekannt. Beispielsweise ist hier die Verwendung des globalen Navigationssatellitensystems GNSS bekannt. Bei anderen Konzepten werden zusätzlich Fahrzeugsensoren und Informationen aus einer digitalen Karte verwendet. In einer solchen digitalen Karte sind die hochgenauen Positionen relevanter Strukturen und Muster, die auch als Landmarken beziehungsweise Landmarkenmuster bezeichnet werden, im Straßenverkehr gespeichert. Auf Basis dieser Informationen wird versucht, diese Strukturen und Muster mit den Fahrzeugsensoren wiederzuerkennen und so Rückschlüsse auf die genaue Fahrzeugposition zu erhalten. Dieser Ansatz wird als landmarkenbasierte Eigenlokalisierung eines Fahrzeugs bezeichnet. Allgemeine Eigenlokalisierungsverfahren sind beispielsweise aus der DE 10 2019 001 450 A1 und der DE 10 20 824 A1 bekannt.

Aus der EP 3 232 159 A1 ist ein Verfahren bekannt, bei welchem die Position eines Fahrzeugs in der Umgebung abhängig von einer Karte geschätzt wird.

Ein landmarkenbasierter Lokalisierungsansatz ist gegebenenfalls dann ungenau oder nur eingeschränkt nutzbar, wenn in befahrenen Gebieten Strukturen aus der Umgebung mit wiederkehrenden Mustern auftreten. Derartige Landmarkenmuster können auch zu Mehrdeutigkeiten bei der Positionsbestimmung führen. Daher kann es in solchen Situationen der Fall sein, dass es aufgrund der Beobachtung alleine nicht möglich ist, die Fahrzeugposition eindeutig zu bestimmen. Es sind in dem Zusammenhang daher mehrere Fahrzeugpositionen aufgrund der vorliegenden Beobachtungen und der digitalen Karte möglich und gleich wahrscheinlich. Dies gilt ebenfalls für Lokalisierungsansätze, die vergangene Fahrzeugpositionen mit in Betracht ziehen und dadurch für einen relativ geringen Zeitraum Ungenauigkeiten teilweise kompensieren können. Allerdings können auch bei diesen Ansätzen durch Messrauschen auf Dauer mehrere mögliche Fahrzeugpositionen entstehen. Bei herkömmlichen bekannten Eigenlokalisierungssystemen ist in derartigen Situationen der Nachteil gegeben, dass detektierte Landmarken dann nicht mehr für die Eigenlokalisierung genutzt werden können. Es ist daher bei herkömmlichen Systemen eine Situation gegeben, bei welcher eine Landmarke entweder vollständig genutzt werden kann oder grundsätzlich nicht genutzt werden kann.

Es ist Aufgabe der vorliegenden Erfindung, ein wiederkehrendes Muster von Landmarken und somit ein Landmarkenmuster in die Umgebung eines Fahrzeugs verbessert beurteilen zu können und somit die Nutzbarkeit für eine Eigenlokalisierung zu verbessern. Ebenso ist es Aufgabe, ein elektronisches Eigenlokalisierungssystem für ein Fahrzeug zu schaffen.

Ein Aspekt der Erfindung betrifft ein Verfahren zur Bestimmung einer Nutzungsart eines Landmarkenmusters für eine Eigenlokalisierung eines Fahrzeugs. Das Landmarkenmuster ist in einem Umgebungsbereich des Fahrzeugs angeordnet. Das Landmarkenmuster weist mehrere gleiche Landmarkenteile zur Bildung des Landmarkenmusters auf. Bei dem Verfahren werden folgende Schritte durchgeführt:
- Bereitstellen einer digitalen, globalen Karte des Umgebungsbereichs, die das Landmarkenmuster aufweist;
- Erfassen des Umgebungsbereichs mit zumindest einer Erfassungseinheit des Fahrzeugs;
- Analysieren der erfassten Informationen dahingehend, ob zumindest ein Landmarkenteil des Landmarkenmusters erfasst wurde;
- Falls ein Landmarkenteil erfasst wurde, wird ein Zuordnen dieses Landmarkenteils zu dem korrespondierenden Landmarkenteil in der digitalen Karte versucht;
- Nutzung des Landmarkenmusters für die Eigenlokalisierung des Fahrzeugs gemäß einer ersten Nutzungsart, falls eine eindeutige Zuordnung des erfassten Landmarkenteils zu dem korrespondierenden Landmarkenteil in der digitalen Karte erfolgreich war, oder
- Nutzung des Landmarkenmusters für die Eigenlokalisierung des Fahrzeugs gemäß einer zu ersten Nutzungsart unterschiedlichen zweiten Nutzungsart, falls eine eindeutige Zuordnung des erfassten Landmarkenteils zu dem korrespondierenden Landmarkenteil in der digitalen Karte nicht erfolgreich war.

Durch eine derartige Vorgehensweise wird es nunmehr ermöglicht, ein Landmarkenmuster nicht nur zu verwenden oder nicht zu verwenden, sondern es auf zumindest zwei verschiedene Arten zu verwenden beziehungsweise zu nutzen. Dadurch ist eine landmarkenbasierte Lokalisierung und somit eine diesbezügliche Eigenlokalisierung des Fahrzeugs deutlich verbessert. Es kann somit auf zumindest zwei verschiedene Arten das Landmarkenmuster genutzt werden, um eine Eigenlokalisierung des Fahrzeugs durchführen zu können. Damit wird das Eigenlokalisierungsprocedere flexibler und variabler und es wird somit die Wahrscheinlichkeit, dass eine Positionsbestimmung des Fahrzeugs landmarkenbasiert erfolgen kann, erhöht.

Es kann somit auch situationsabhängiger und somit auf die jeweilige momentane Erfassungssituation eines Landmarkenmusters individueller reagiert werden und abhängig davon eine bedarfsgerechte Verwendung des Landmarkenmusters für die Eigenlokalisierung eines Fahrzeugs bereitgestellt werden.

Das Verfahren spezifiziert sich in dem Zusammenhang nämlich dahingehend, die einzelnen Landmarkenteile genauer zu analysieren und dann abhängig vom Zuordnungsgrad zu dem Landmarkenteil in der digitalen Karte eine Nutzungsart festzulegen. Bei dem Verfahren wird also als wesentliches Kriterium betrachtet, ob eine erfasste Ausgestaltung eines Landmarkenmusters, insbesondere ein Landmarkenteil dieses Landmarkenmusters, einem entsprechenden Pendant in der digitalen Karte entspricht. Abhängig von der Eindeutigkeit dieses Zuordnungsgrades wird die Art der Nutzung dieses erfassten Landmarkenteils bestimmt. Insbesondere ist vorgesehen, dass, je höher der Zuordnungsgrad erfolgen kann und somit je eindeutiger das erfasste Landmarkenteil einem entsprechenden Landmarkenteil in der digitalen Karte zugeordnet wird, umso höher auch die Art der Nutzung ist. Dies bedeutet, dass diesbezüglich die Art der Nutzung umso umfänglicher und vielfältiger für die Eigenlokalisierung ist, je höher der Zuordnungsgrad ist.

Es können, insbesondere in dem Zusammenhang, zumindest zwei diskrete, verschiedene Nutzungsarten vorgesehen sein. Es können auch mehr als zwei diskrete, verschiedene Nutzungsarten vorgesehen sein. Die Anzahl der Nutzungsarten und/oder die Ausgestaltungen der Nutzungsarten können für ein spezifisches Landmarkenmuster vorgegeben sein. Es kann aber auch vorgesehen sein, dass die Anzahl der Nutzungsarten und/oder die Ausgestaltungen der Nutzungsarten abhängig von einer Erfassungssituation, insbesondere von einer Erfassungssituation betreffend die Umgebung des Fahrzeugs und/oder von einer Erfassungssituation betreffend das erfasste Landmarkenmuster individuell erzeugt wird. Insbesondere können die Nutzungsarten in der Anzahl und/oder der Art der für die Eigenlokalisierung nutzbaren charakteristischen Kennzeichen zumindest eines Landmarkenteils unterschiedlich sein. Ein charakteristisches Kennzeichen können die Geometrieinformationen und/oder Kontureninformationen eines Landmarkenteils sein.

Damit ist es auch erreicht, dass ein erfasstes Landmarkenmuster, insbesondere zumindest ein Landmarkenteil davon, nicht vollständig bezüglich der Eigenlokalisierung verworfen werden muss, wenn es nicht eindeutig einem Pendant in der digitalen Karte zugeordnet werden kann. Vielmehr wird mit diesem neuen Verfahren dann eine gewisse Nutzungsabstufung vollzogen, sodass dieses Landmarkenmuster, insbesondere ein Landmarkenteil, auch dann für die Eigenlokalisierung genutzt wird, wenn sie nicht eindeutig einem Pendant in der digitalen Karte zugeordnet werden kann.

In einem Ausführungsbeispiel unterscheiden sich diese zumindest zwei Nutzungsarten in einem Genauigkeitsgrad der Eigenlokalisierung. Insbesondere wird die erste Nutzungsart mit einem höheren Genauigkeitsgrad vorgegeben als die zweite Nutzungsart. Dies bedeutet, dass eine Eigenlokalisierung mit dem ersten Nutzungsgrad genauer möglich ist als mit der zweiten Nutzungsart. Mit der Verwendung des Landmarkenmusters gemäß verschiedener Nutzungsarten ist somit auch eine unterschiedliche Genauigkeit der Eigenlokalisierung verknüpft. Somit kann mit dem vorgeschlagenen Konzept auch ein gestuftes Genauigkeitsprinzip der Eigenlokalisierung zugrundegelegt werden. Dies ist auf Basis des grundsätzlichen neuen Ansatzes ermöglicht, dass ein Landmarkenmuster auf verschiedene Arten genutzt werden kann. In diesen Situationen ist es in dem Zusammenhang hilfreich und von größerer Bedeutung, ein Landmarkenmuster zumindest dahingehend nutzen zu können, dass eine Eigenlokalisierung des Fahrzeugs grundsätzlich möglich ist, auch wenn dies gegebenenfalls mit einer im Vergleich zu anderen Nutzungsarten geringeren Genauigkeit einhergeht. Dies ist im Vergleich zu einer grundsätzlich nicht vorgesehenen und nicht möglichen Nutzung eines Landmarkenmusters eine deutliche Verbesserung. Denn auf Basis dieser zumindest mit reduzierter Genauigkeit einhergehenden Möglichkeit, ein Landmarkenmuster für die Eigenlokalisierung nutzen zu können, kann dies auch Vorteile für das weitere Fortbewegen des Fahrzeugs haben. Insbesondere auch im Hinblick auf dann ein wiederum gegebenenfalls verbessertes Bestimmen der Eigenlokalisierung beim weiteren Fortbewegen des Fahrzeugs. Gegebenenfalls kann in dem Zusammenhang dann auch auf Aspekte zurückgegriffen werden, die in der Phase vorlagen beziehungsweise erzeugt wurden, in der nur eine Eigenlokalisierung mit geringerem Genauigkeitsgrad möglich war.

In einem vorteilhaften Ausführungsbeispiel wird eine Eigenlokalisierung bei der ersten Nutzungsart in zwei Richtungen relativ zum Landmarkenmuster durchgeführt. Dies bedeutet, dass die Position des Fahrzeugs, insbesondere relativ zu diesem Landmarkenmuster, insbesondere zumindest zu diesem erfassten Landmarkenteil des Landmarkenmusters, in derartigen mehreren Richtungen ermöglicht ist. Insbesondere sind diese beiden Richtungen senkrecht aufeinanderstehende Richtungen. Sie können in einer Horizontalebene orientiert sein. Damit ist es ermöglicht, dass bei dieser ersten Nutzungsart insbesondere zumindest ein zweidimensionaler Informationsgehalt über die Position des Fahrzeugs bestimmt werden kann und dies in Bezug zu diesem Landmarkenteil.

Insbesondere ist es vorgesehen, dass eine Eigenlokalisierung bei der zweiten Nutzungsart dieses Landmarkenmusters nur in einer der beiden Richtungen relativ zum Landmarkenmuster durchgeführt wird. Somit unterscheiden sich die Nutzungsarten bei diesem vorteilhaften Ausführungsbeispiel dahingehend, in wie vielen Raumrichtungen, insbesondere in einem Koordinatensystem, eine Position des Fahrzeugs relativ zu diesem Landmarkenteil bestimmt werden kann.

Vorzugsweise wird bei der ersten Nutzungsart zur Eigenlokalisierung des Fahrzeugs, in Fahrtrichtung des Fahrzeugs betrachtet, eine laterale Position des Fahrzeugs zum Landmarkenteil, insbesondere zum Landmarkenmuster, und eine longitudinale Position des Fahrzeugs zum Landmarkenteil, insbesondere zum Landmarkenmuster, bestimmt. Es wird somit bei dieser Ausgestaltung insbesondere eine Position des Fahrzeugs in Richtung der Längsachse des Fahrzeugs zu dem Landmarkenteil bestimmt und in Richtung einer Querachse des Fahrzeugs zum Landmarkenteil bestimmt. Damit kann in besonders vorteilhafter Weise eine zweidimensionale Positionsbestimmung des Fahrzeugs zum Landmarkenteil erfolgen.

Bei der zweiten Nutzungsart zur Eigenlokalisierung des Fahrzeugs wird in Fahrtrichtung des Fahrzeugs betrachtet nur eine laterale Position des Fahrzeugs zum Landmarkenteil, insbesondere dem Landmarkenmuster, bestimmt. In dem Zusammenhang wird somit lediglich eine eindimensionale Koordinateninformation, nämlich in Richtung der Querachse des Fahrzeugs in Bezug zu diesem Landmarkenteil bestimmt. Insbesondere ist es somit in dem Zusammenhang vorgesehen, dass nur ein seitlicher Versatz des Fahrzeugs zu diesem Landmarkenteil bestimmt wird.

In einem weiteren Ausführungsbeispiel wird vorgesehen, dass bei der ersten Nutzungsart zur Eigenlokalisierung des Fahrzeugs die Menge der verfügbaren Informationen, insbesondere die Geometrie und/oder Positionsinformationen, des Landmarkenteils größer als bei der zweiten Nutzungsart ist. Dies bedeutet, dass Geometrieinformationen des Landmarkenteils bei der ersten Nutzungsart umfänglicher und/oder genauer zur Verfügung stehen, als bei der zweiten Nutzungsart. Dies können Breiteninformationen und/oder Längeninformationen und/oder Höheninformationen des Landmarkenteils sein. Positionsinformationen des Landmarkenteils können in dem Zusammenhang Positionsinformationen eines Endes des Landmarkenteils und/oder eines Anfangs des Landmarkenteils, insbesondere in longitudinaler Richtung und somit in Fahrtrichtung des Fahrzeugs, sein. Ebenso können jedoch auch beispielsweise seitliche Begrenzungen des Landmarkenteils bezüglich ihrer Position bekannt sein. In einem vorteilhaften Ausführungsbeispiel werden bei der ersten Nutzungsart die einzelnen, erfassten Landmarkenteile des Landmarkenmusters jeweils zur Eigenlokalisierung genutzt. Bei der zweiten Nutzungsart wird das Landmarkenmuster nur symbolisiert und geometrisch ähnlich im Vergleich zur tatsächlichen Geometrie für die Eigenlokalisierung genutzt. Dazu werden insbesondere Landmarkenteile als eine zusammengefügte Gesamtheit zugrundegelegt. Die Symbolisierung resultiert daher darin, dass die einzelnen, separaten Landmarkenteile als nicht mehr separiert, sondern als zusammenhängende, unterbrechungsfreie Gesamtheit betrachtet werden.

Nicht nur an dieser Stelle kann als Beispiel für ein Landmarkenmuster eine Mittellinie einer Straße betrachtet werden, die zwei Fahrspuren der Straße separiert. Eine derartige Mittellinie kann ein Landmarkenmuster sein, welches aus mehreren Landmarkenteilen besteht. Diese Landmarkenteile sind als Teilstriche dieser gestrichelten Mittellinie gebildet. Sie können bei der ersten Nutzungsart jeweils individuell für sich betrachtet genutzt werden. Ist in dem Zusammenhang eine entsprechende Zuordnung eines derartigen Strichs zu einem entsprechenden Landmarkenteil in der digitalen Karte ermöglicht, so kann dieses einzelne Landmarkenteil dem entsprechenden Landmarkenteil in der Karte zugeordnet werden. Aufgrund dieser Möglichkeit ist es dann gemäß dem Verfahren erreicht, dass eine erste Nutzungsart dieses einzelnen Landmarkenteils ermöglicht ist. Da in dem Zusammenhang dann beispielsweise die Geometrie und/oder die Position des Landmarkenteils genau bekannt und zugeordnet werden kann, kann dieses Landmarkenteil für sich betrachtet für eine longitudinale und laterale Positionsbestimmung des Fahrzeugs zu diesem Landmarkenteil genutzt werden. Es sind in dem Zusammenhang in vorteilhafter Weise in longitudinaler Richtung der Anfang und das Ende dieses Landmarkenteils bekannt. Dies kann auch für ein oder mehrere weitere derartige Landmarkenteile eines Landmarkenmusters der Fall sein.

Ist andererseits eine derartige eindeutige Zuordnung eines Landmarkenteils zu einem entsprechenden Landmarkenteil in der Karte nicht möglich, so kann gemäß der zweiten Nutzungsart das Landmarkenmuster als durchgezogene Linie symbolisiert werden und entsprechend zugrundegelegt werden. Es ist dann keine Ausgestaltung aus einzelnen Landmarkenteilen mehr gegeben. Insbesondere wird eine derartige Symbolisierung durch das elektronische Eigenlokalisierungssystem selbst durchgeführt. Diese Musteranpassung beziehungsweise Mustersymbolisierung wird somit durch das Eigenlokalisierungssystem selbstständig und automatisch abhängig von dem Zuordnungsprozess durchgeführt. Obwohl also in der Realität eine gestrichelte Mittellinie vorhanden ist, die die einzelnen Teilstücke beziehungsweise Teillinien der Landmarkenteile des gesamten Landmarkenmusters darstellen, können bei dieser zweiten Nutzungsart diese Einzelteile jeweils für sich und separat betrachtet nicht mehr für die Eigenlokalisierung als solche genutzt werden und werden diesbezüglich durch einen Symbolisierungsprozess so definiert, dass eine Nutzung gemäß der zweiten Nutzungsart erfolgen kann. Diese Symbolisierung ist jedoch keine vollständige Veränderung, sondern ein geringfügiger Veränderungsprozess der eigentlichen Form und/oder Geometrie des Landmarkenmusters beziehungsweise zumindest eines Landmarkenteils. Insbesondere kann in dem Zusammenhang auch ein Landmarkenteil als durchgezogene Linie verstanden werden, wenn ein derartiges Landmarkenmuster das oben genannte Beispiel einer eigentlich tatsächlich gestrichelten Linie ist.

Entsprechendes kann gemäß einem weiteren Beispiel durch Elemente einer Leitplanke, mit welcher eine Fahrbahn randseitig begrenzt ist, durchgeführt werden. Leitplanken weisen üblicherweise separate Stützpfeiler auf, die in bestimmten Abständen und separat zueinander im Boden angeordnet sind und nach oben ragen. An diesen Stützpfeilern sind dann horizontal orientiert Planken angeordnet. Derartige Stützpfeiler ergeben ebenfalls ein Landmarkenmuster. Jeder dieser Stützpfeiler stellt ein Landmarkenteil dar. Entsprechen sind bei den oben genannten anderen Beispielen auch hier wiederholende und gleiche Landmarkenteile in spezifischer Anordnung zueinander positioniert. Insbesondere sind sie diesbezüglich beabstandet, vorzugsweise im gleichen Abstand zueinander positioniert. Sie weisen die gleiche Form und Geometrie auf. Sie bilden in dem Zusammenhang eine Reihe, entlang welcher diese Landmarkenteile angeordnet sind.

Ebenso kann in einem weiteren Beispiel eine Anordnung von mehreren gleichen Landmarkenteilen als Landmarkenmuster dienen. Es können in dem Zusammenhang auch anderweitige Pfeiler von Zäunen oder dergleichen als ein derartiges Landmarkenmuster bezeichnet werden. Ebenso ist es möglich, dass ein Landmarkenmuster nicht nur bodengebunden angeordnet ist, sondern auch anderweitig positioniert ist. Beispielsweise können dies entsprechende Landmarkenteile an einer Wand oder an einer Decke sein. So können dies beispielsweise Lichtquellen sein, die Landmarkenteile sind und in Summe ihrer separaten Anzahl und der beabstandeten Anordnung zueinander ein Landmarkenmuster ergeben. Beispielsweise kann eine derartige Anordnung von mehreren Lichtquellen als Landmarkenteile an einer seitlichen Tunnelwand oder an einer Deckenwand des Tunnels vorgesehen sein.

Bei diesen Ausführungen kann dann bei der zweiten Nutzungsart vorgesehen sein, dass beispielsweise die Stützpfeiler oder Befestigungspfosten oder Lichtquellen symbolisiert als zusammenhängende Lichtquellenlinie und/oder Stützpfeilerlinie und/oder Pfostenlinie betrachtet wird.

Vorzugsweise weist ein Landmarkenmuster zumindest zwei gleiche, separate Landmarkenteile auf, insbesondere zumindest fünf, insbesondere zumindest zehn Landmarkenteile auf.

In einem vorteilhaften Ausführungsbeispiel ist vorgesehen, dass zumindest dann, wenn aktuell eine Nutzung nur gemäß der zweiten Nutzungsart möglich ist, beim weiteren Fortbewegen des Fahrzeugs überprüft wird, ob wieder eine erste Nutzungsart möglich ist. Insbesondere wird dies kontinuierlich überprüft, insbesondere durch das Eigenlokalisierungssystem. Ist also ein Zustand eingetreten, bei welchem gegebenenfalls nur mit einer reduzierten Genauigkeit eine Eigenlokalisierung des Fahrzeugs anhand von Landmarkenteilen erfolgen kann, wird geprüft, ob gegebenenfalls wiederum eine verbesserte Eigenlokalisierung ermöglicht ist und dies anhand der ersten Nutzungsart von Landmarkenteilen erfolgen kann. Dies ist eine weitere sehr vorteilhafte Ausführung, da schnellstmöglich und automatisch durch das System erst selbst erkannt werden kann, wann wiederum die Möglichkeit der ersten Nutzungsart für die Eigenlokalisierung besteht und dies dann auch gegebenenfalls unverzüglich durchgeführt wird.

Vorzugsweise wird bei dem Prüfen abhängig von der Möglichkeit, ob in dem Umgebungsbereich weitere Landmarken, die nicht zum Landmarkenmuster und/oder nicht zu einem anderen Landmarkenmuster zugehörig sind, erfasst werden können. Ist dies der Fall, wird eine Zuordnung dieser erfassten Landmarke zu der korrespondierenden Landmarke in der digitalen Karte durchgeführt. Dann, wenn eine Zuordnung diesbezüglich erfolgreich war, wird abhängig von dieser Zuordnung ein eindeutiges Zuordnen eines erfassten Landmarkenteils des Landmarkenmusters zu dem korrespondierenden Landmarkenteil in der digitalen Karte ermöglicht. Diese eindeutige Zuordnung wird durchgeführt. In diesem vorteilhaften Ausführungsbeispiel wird also zusätzlich überprüft, ob weitere Landmarken im Umgebungsbereich vorhanden sind und erfasst werden können. Auf Basis dieser dann gegebenenfalls erfassten und von einem Landmarkenmuster unterschiedlichen und/oder zu einem anderen Landmarkenmuster zugehörigen Landmarken beziehungsweise Landmarkenteilen kann dann verbessert entschieden werden, ob dennoch eine Zuordnung des zunächst nicht zuordenbaren Landmarkenteils zu dem in der Karte korrespondierenden Landmarkenteils indirekt ermöglicht ist. Es kann somit gegebenenfalls auf Basis von anderweitigen Landmarken, die genauer erfasst werden können und diesbezüglich eindeutiger den entsprechenden Landmarken in der digitalen Karte zugeordnet werden, geschätzt und/oder rückgeschlossen werden, ob das Landmarkenteil des zu beurteilenden Landmarkenmusters nicht dennoch zum korrespondierenden Landmarkenteil in der digitalen Karte zugeordnet werden kann. Insbesondere dahingehend, dass mit diesem indirekten Zuordnen einer höheren Wahrscheinlichkeit diese Zuordnung ermöglicht ist und somit dann dieses Landmarkenteil gemäß der ersten Nutzungsart für die Eigenlokalisierung wiederum genutzt werden kann.

Es ist durch das Eigenlokalisierungssystem auch eine weitere intelligente Vorgehensweise bereitgestellt, die die mögliche Zuordnung des Landmarkenteils dahingehend ermöglicht, dass eine erste Nutzungsart zugrundegelegt werden kann und dieser Prozess im Wesentlichen nicht auf Informationen des Landmarkenteils selbst erfolgt, sondern auf Basis von Informationen von anderen Landmarken erfolgt.

In einem vorteilhaften Ausführungsbeispiel wird das vorgeschlagene Verfahren im Bereich von eingehausten Fahrbahnabschnitten durchgeführt. Beispielsweise kann dies beim Einfahren in einen Tunnel und/oder beim Fahren in einem Tunnel und/oder bei einem Ausfahren aus einem Tunnel durchgeführt werden. Auch anderweitige Fahrten können in eingehausten Bereichen, wie dies beispielsweise unter langen Brücken oder gegebenenfalls in mehrstöckigen Fahrbahnen, wie dies beispielsweise in Städten der Fall ist, erfolgen. Beispielsweise können mehrere Verkehrswege in Höhenrichtung betrachtet übereinander angeordnet sein, sodass diesbezüglich zumindest nach oben hin für eine Fahrbahn eine Fahrteinhausung gebildet ist. Darüber hinaus kann derartiges auch beispielsweise in einem Parkhaus genutzt und durchgeführt werden. In derartigen eingehausten Fahrbahnbereichen kann es dazu kommen, dass eine reduzierte Anzahl und/oder eine reduzierte Möglichkeit zur Erfassung von vielfältigen unterschiedlichen Landmarken besteht. Aufgrund dieser Situation stehen gegebenenfalls auch hier nur noch Landmarkenteile eines Landmarkenmusters zur Verfügung. Ist dies der Fall, so ist das oben genannte Verfahren auch hier besonders vorteilhaft. Insbesondere auch dann, wenn in diesem Fahrbahnabschnitt, insbesondere im eingehausten Fahrbahnabschnitt, keine weitere Positionsbestimmungsmöglichkeit gegeben ist. Beispielsweise kann dies dann der Fall sein, wenn in einem eingehausten Bereich auch kein GNSS-Signal durch das Fahrzeug empfangen werden kann. Gerade in derartigen Bereichen, in denen eine derartige Positionsbestimmung sehr reduziert ist und insbesondere ausschließlich landmarkenbasiert erfolgen kann, ist das vorgeschlagene Verfahren besonders vorteilhaft. Insbesondere dann, wenn zusätzlich zu den Landmarkenteilen eines Landmarkenmusters keine oder nur noch wenige anderweitige Landmarken zur Verfügung stehen, die erfasst werden können und zur Eigenlokalisierung des Fahrzeugs, insbesondere zusätzlich, genutzt werden können.

Daher ist das Verfahren bei diesen Konstellationen, wie sie eben erläutert wurden, besonders vorteilhaft.

Ist in einem Zeitpunkt in der Vergangenheit die genaue Position eines Landmarkenteils bekannt, kann mithilfe der Odometrie und Strukturen in der Umgebung weiterhin die aktuelle Position korrekt bestimmt werden. In einem eingehausten Fahrbahnabschnitt können in dem Zusammenhang besonders vorteilhaft die oben genannten Landmarkenmuster genutzt werden.

Da Fehler anderer Komponenten das Eigenlokalisierungssystem jedoch nachteilig beeinflussen können, kann es zu fehlerhaften Positionsschätzungen bei derartigen Konstellationen kommen. Dies führt dazu, dass auch die nachfolgenden Positionsbestimmungen in darauffolgenden Zeitschritten negativ beeinflusst werden. Derartiges wird durch das oben vorgeschlagene Verfahren oder die vorteilhaften Ausführungsbeispiele zumindest deutlich reduziert, insbesondere zumindest teilweise vollständig behoben.

Auch bei teilweise nicht eingehausten Fahrbahnabschnitten, wie es beispielsweise auf einer Autobahn der Fall ist, können entsprechende Situationen auftreten. Da das Umfeld beziehungsweise die Umgebung von Autobahnen ebenfalls relativ arm an Strukturen und Mustern sind, die geeignete Landmarken sein können, ist auch dort das vorgeschlagene Verfahren vorteilhaft. Dort kann es beispielsweise aufgrund einer ungenauen GNSS-Position dazu kommen, dass Mehrdeutigkeiten in Bezug zu den wiederkehrenden Strukturen beziehungsweise Landmarkenmuster nicht eindeutig aufgelöst werden können. Die fehlerhafte Zuordnung würde auch hier zu einer Abweichung der Position des Fahrzeugs entlang der Fahrtrichtung führen, insbesondere teilweise bis zu mehreren Metern abweichen. Diese entsprechen beispielsweise der Länge einer Teillinie einer gestrichelten Linie oder einer sonstig gestrichelten Fahrbahnmarkierung. Auch dies wird durch das vorgeschlagene Verfahren deutlich verbessert. Eine weitere Problemsituation ist dann gegeben, wenn die genaue Startposition und Endposition von unterbrochenen Landmarkenmustern nicht mit der Karte übereinstimmen. Auch dies kann mit dem vorgeschlagenen Verfahren zumindest deutlich dahingehend verbessert werden, dass diesbezüglich dann unterschiedliche Nutzungsmöglichkeiten der Landmarkenteile des Landmarkenmusters für eine Eigenlokalisierung des Fahrzeugs generiert werden können.

Insbesondere ist es somit mit dem Verfahren möglich, situationsabhängig die Art der Nutzung beziehungsweise die Art der Verwendung von sich wiederholenden Mustern zur Eigenlokalisierung anzupassen. Insbesondere wird in dem Zusammenhang zwischen Situationen unterschieden, in denen Mehrdeutigkeiten dieses Landmarkenmusters aufgelöst werden können, und Situationen, in denen es nicht möglich ist. Dies bedeutet, dass Situationen dahingehend unterschieden werden, ob eine eindeutige Zuordnung eines Landmarkenteils zu einem entsprechenden Landmarkenteil in der digitalen Karte möglich ist oder dies nicht eindeutig möglich ist. Es kann möglich sein, dass diese Informationen in Bezug auf die Mehrdeutigkeiten als Zustandswert in einem Speicher des Eigenlokalisierungssystems gespeichert werden. Können dann derartige Mehrdeutigkeiten mit ausreichender Sicherheit aufgelöst werden, so kann somit eine eindeutige Zuordnung eines Landmarkenteils zu einem entsprechenden Landmarkenteil in der digitalen Karte erfolgen, und es kann dieser Situation ein erster Zustand zugeordnet werden. Dies kann entsprechend gespeichert werden. Beispielsweise kann ein derartiges Auflösen auch vorteilhaft durch weitere Informationen erfolgen, die verfügbar sind. Insbesondere kann dies, wie dies bereits oben dargelegt wurde, anhand von Positionen anderer erfasster Landmarken ermöglicht werden. Diesbezüglich kann dann indirekt eine Zuordnung des zu beurteilenden Landmarkenteils zu dem entsprechenden Landmarkenteil in der Karte erfolgen. Bei diesem ersten Zustand, der die erste Nutzungsart darstellt, können auch insbesondere Informationen über die Position von einem in Richtung der Fahrtrichtung des Fahrzeugs betrachteten Startpunkt und/oder einem Endpunkt des Landmarkenteils für die Positionsbestimmung genutzt werden.

Ist es andererseits nicht möglich, dass diesbezüglich eine eindeutige Zuordnung zwischen dem Landmarkenteil und dem entsprechenden Pendant in der digitalen Karte erfolgen kann und können somit Mehrdeutigkeiten nicht aufgelöst werden, ist die zumindest zweite Nutzungsart vorgesehen. Es wird dann ein Anpassen des Landmarkenmusters durch das Eigenlokalisierungssystem vorgesehen, insbesondere diesbezüglich eine symbolhafte Gestaltung des Landmarkenmusters zugrundegelegt. Dies kann dann gemäß einem zweiten Zustand charakterisiert sein. Auch dieser kann entsprechend abgespeichert sein. Bei dieser zweiten Nutzungsart bleibt dann gewollt und somit bewusst ein Teil der vorhandenen Informationen dieses Landmarkenteils für die Eigenlokalisierung ungenutzt. Beispielsweise kann in dem Zusammenhang ein Startpunkt und/oder eine Endpunkt eines Landmarkenteils für die Eigenlokalisierung nicht genutzt werden. Insbesondere auch deswegen, da in dieser zweiten Nutzungsart dieses Landmarkenteil als durchgezogenes Element und somit quasi ohne Startpunkt und Endpunkt betrachtet wird.

Somit wird bei dieser Ausführung insbesondere nur der seitliche Abstand des Fahrzeugs zu den Landmarkenteilen des Landmarkenmusters genutzt. Insbesondere ist damit auch erreicht, dass bei dieser Situation keine fehlerhaften Zuordnungen die Lokalisierungsgenauigkeit verschlechtern.

Insbesondere kann auch vorgesehen sein, dass der aktuelle Zustand des Systems ermittelt wird. Dies bedeutet, dass entsprechend bestimmt wird, welche Nutzungsart zumindest eines Landmarkenteils vorliegt. Beispielsweise kann in dem Zusammenhang durch sehr charakteristische Elemente in der Umgebung des Fahrzeugs mit ausreichender Sicherheit die genaue Position identifiziert werden. Wenn dies der Fall ist, kann das System von einer zweiten Nutzungsart eines Landmarkenteils für die Eigenlokalisierung automatisch wieder auf die erste Nutzungsart des Landmarkenteils zur Eigenlokalisierung wechseln. Anhand der Fahrzeugodometrie und auch Umfeldsensoren kann weiterhin die genaue Position entlang des Landmarkenmusters bestimmt werden. Da die Unsicherheit mit der Zeit und/oder zurückgelegten Strecke des Fahrzeugs zunimmt, werden vorzugsweise Verifikationen wiederholt. Dies kann in diskreten Zeitabständen erfolgen. Es kann in dem Zusammenhang auch vorgesehen sein, dass von einer ersten Nutzungsart des Landmarkenteils in eine zweite Nutzungsart des Landmarkenteils gewechselt wird, wenn diese Verifikation fehlschlägt und/oder in einem gewissen Zeitraum nicht mehr durchgeführt werden konnte. Eine weitere Möglichkeit eines derartigen Wechsels kann dann vorgesehen sein, wenn die Messungen der Erfassungseinheit dieser Landmarkenteile nicht mit den Informationen aus der digitalen Karte übereinstimmen.

In einem vorteilhaften Ausführungsbeispiel wird ein Verlauf eines Streckenabschnitts beziehungsweise eines Fortbewegungsabschnitts, auf dem sich das Fahrzeug auf dem Verkehrsweg fortbewegt, erfasst. Es wird ein charakteristischer Verlaufsabschnitt dieses Fortbewegungsabschnitts erkannt. In der digitalen Karte ist eine Karten-Zuordnung zwischen einem charakteristischen Verlaufsabschnitt dieses Fortbewegungsabschnitts und einem Landmarkenteil als Karteninformationen bekannt. Abhängig von dieser Karteninformation wird ein erfasstes Landmarkenteil dem erfassten charakteristischen Verlaufsabschnitt eindeutig zugeordnet, sodass abhängig von dieser Zuordnung die erste Nutzungsart des Landmarkenteils ermöglicht wird. Es ist somit bei diesem Ausführungsbeispiel ermöglicht, zusätzlich oder anstatt zu weiteren anderen Landmarken, die in der Umgebung des Fahrzeugs erfasst werden, Informationen zu erhalten, die das zu beurteilende Landmarkenteil dennoch dem entsprechenden Landmarkenteil in der digitalen Karte zuordnen lassen. Ein derartiger charakteristischer Verlaufsabschnitt stellt somit keine andere Landmarke dar und/oder kein Landmarkenteil dar, das Bestandteil des Landmarkenmusters oder eines anderen Landmarkenmusters ist, sondern gibt eine geometrische Information des Fortbewegungsabschnitts wieder, die eindeutig ist und auch entsprechend in der Karte zugeordnet werden kann. Da aufgrund dieser eindeutigen Zuordnungsmöglichkeit wiederum bekannt ist, wie eine, insbesondere positionelle, Zuordnung dieses charakteristischen Verlaufsabschnitts zum Landmarkenteil in der Realität und/oder der Karte ist, ist es dann wiederum auch möglich, auf Basis der Zuordnung des erfassten charakteristischen Verlaufsabschnitts und des erfassten Landmarkenteils eine Zuordnung des erfassten Landmarkenteils indirekt zu dem Landmarkenteil in der Karte durchzuführen. Auch dadurch ist es dann indirekt möglich, eine eigentlich nicht direkt Zuordenbare Ausgestaltung eines Landmarkenteils zum Pendant in der Karte dennoch auf diesem indirekten Weg so zuordnen zu können, dass die erste Nutzungsart dieses Landmarkenteils ermöglicht wird. Ein derartiger charakteristischer Verlaufsabschnitt kann beispielsweise eine spezifische Krümmung des Fortbewegungsabschnitts sein. Beispielsweise kann dies ein charakteristischer Knick in einer Einhausung wie beispielsweise eines Tunnels sein. Da dieser charakteristische, insbesondere nicht-geradlinige Verlaufsabschnitt als charakteristischer Verlaufsabschnitt auch positionell sehr genau bekannt ist, ist dieses vorteilhafte Ausführungsbeispiel für die Zuordnung des Landmarkenteils ebenfalls sehr vorteilhaft.

Vorzugsweise wird die Karten-Zuordnung auf Basis von in der Vergangenheit erfassten Landmarkenteilen und deren Zuordnung zu charakteristischen Verlaufsabschnitten erstellt. Dies bedeutet, dass in dem Zusammenhang eindeutige Zuordnungen zwischen einem charakteristischen Verlaufsabschnitt und einem Landmarkenteil gegeben ist. Diese Information kann dann aktuell genutzt werden, um eine derartige indirekte Zuordnung eines Landmarkenteils zu einem entsprechenden Pendant in der Karte durchzuführen.

Vorzugsweise wird ein Wechsel zwischen den beiden Nutzungsarten abhängig von den erfassten Landmarken in dem Umgebungsbereich und dem Umfang von Zuordnungsmöglichkeiten zu Landmarken in der digitalen Karte automatisch durchgeführt. Insbesondere erfolgt dies durch das elektronische Eigenlokalisierungssystem.

Das vorgeschlagene Verfahren wird insbesondere dann durchgeführt, wenn aktuell nur eine Anzahl von Landmarken kleiner einem vorgegebenen Schwellwert durch die Erfassungseinheit des Fahrzeugs erfasst werden kann. Dies ist insbesondere in derartigen Situationen möglich, insbesondere häufig, wie sie oben erläutert wurden, insbesondere beispielsweise in eingehausten Fortbewegungsabschnitten und/oder auf Autobahnen.

Es wird also in einem Ausführungsbeispiel definiert eine derartige Schwellwertbeurteilung vorgegeben, die auch durchgeführt wird. Der Schwellwert kann in dem Zusammenhang situationsabhängig individuell vorgegeben sein und/oder gegebenenfalls auch durch das elektronische Eigenlokalisierungssystem automatisch angepasst werden.

In einem Ausführungsbeispiel ist vorgesehen, dass die Anzahl an unterschiedlichen Nutzungsarten eines Landmarkenmusters, insbesondere zumindest eines Landmarkenteils des Landmarkenmusters, vorgegeben ist. Es kann in einem Ausführungsbeispiel die Anzahl der Nutzungsarten abhängig von der Art des Landmarkenmusters und/oder abhängig von der Art der Landmarkenteile sein. Dies bedeutet, dass die Anzahl der Nutzungsarten auch fest vorgegeben ist, jedoch abhängig davon, welches Landmarkenmuster erfasst wird, dann die zugehörige Anzahl vorliegt. Dazu können beispielsweise die Geometrie und/oder die Umgebung, in welcher ein Landmarkenmuster auftritt und/oder die Anzahl an erfassten Landmarkenteilen des Landmarkenmusters berücksichtigt werden. Dies kann beispielsweise in einer Tabelle des Eigenlokalisierungssystems abgelegt sein. Beispielsweise können dazu auch Referenz-Landmarkenmuster abgelegt sein.

In einem Ausführungsbeispiel kann vorgesehen sein, dass die Anzahl größer oder gleich der Nutzungsarten abhängig von den erfassten Informationen über das Landmarkenmuster durch das Eigenlokalisierungssystem individuell bestimmt wird. Insbesondere können dazu ein Betriebszustand der Erfassungseinheit und/oder ein aktueller Betriebszustand des Fahrzeugs und/oder ein vergangener Betriebszustand des Fahrzeugs und/oder ein zu erwartender Betriebszustand des Fahrzeugs und/oder eine Art des Landmarkenmusters (Geometrie, Anzahl der, insbesondere erfassten und/oder geschätzten, Landmarkenteile etc.) und/oder eine Position des Landmarkenmusters, insbesondere zumindest eines Landmarkenteils, direkt auf der Fahrbahn und/oder oder außerhalb der Fahrbahn und/oder eine Position des Landmarkenmusters relativ zum Fahrzeug berücksichtigt werden. Die Anzahl der Nutzungsarten kann somit dynamisch bestimmt und verändert werden.

Ein weiterer Aspekt der Erfindung betrifft ein elektronisches Eigenlokalisierungssystem für ein Fahrzeug. Das Eigenlokalisierungssystem weist zumindest eine Erfassungseinheit zum Erfassen des Umgebungsbereichs beziehungsweise der Umgebung des Fahrzeugs auf. Das elektronische Eigenlokalisierungssystem weist zumindest eine Auswerteeinheit zum Auswerten der erfassten Informationen auf. Das Eigenlokalisierungssystem ist zum Durchführen eines Verfahrens gemäß dem oben genannten Aspekt oder einer vorteilhaften Ausgestaltung davon ausgebildet. Insbesondere ist das Eigenlokalisierungssystem zum Durchführen eines Verfahrens zur Bestimmung einer Nutzungsart eines Landmarkenmusters für eine Eigenlokalisierung eines Fahrzeugs ausgebildet. Das Landmarkenmuster ist in dem Umgebungsbereich des Fahrzeugs angeordnet, wobei mehrere gleiche Landmarkenteile zur Bildung des Landmarkenmusters vorgesehen sind. Bei dem von dem elektronischen Eigenlokalisierungssystem durchgeführten Verfahren werden folgende Schritte durchgeführt:
- Bereitstellen einer digitalen, globalen Karte des Umgebungsbereichs, die das Landmarkenmuster aufweist;
- Erfassen des Umgebungsbereichs mit zumindest einer Erfassungseinheit des Fahrzeugs;
- Analysieren der erfassten Informationen dahingehend, ob zumindest ein Landmarkenteil des Landmarkenmusters erfasst wurde;
- Falls ein Landmarkenteil erfasst wurde, wird ein Zuordnen dieses Landmarkenteils zu dem korrespondierenden Landmarkenteil in der digitalen Karte versucht;
- Nutzung des Landmarkenmusters für die Eigenlokalisierung des Fahrzeugs gemäß einer ersten Nutzungsart, falls eine eindeutige Zuordnung des erfassten Landmarkenteils zu dem korrespondierenden Landmarkenteil in der digitalen Karte erfolgreich war, oder
- Nutzung des Landmarkenmusters für die Eigenlokalisierung des Fahrzeugs gemäß einer zu ersten Nutzungsart unterschiedlichen zweiten Nutzungsart, falls eine eindeutige Zuordnung des erfassten Landmarkenteils zu dem korrespondierenden Landmarkenteil in der digitalen Karte nicht erfolgreich war.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Draufsicht auf eine Verkehrssituation und einem elektronischen Eigenlokalisierungssystem gemäß einem Ausführungsbeispiel der Erfindung;
- Fig. 2: eine schematische Draufsicht auf eine weitere Verkehrssituation und einem elektronischen Eigenlokalisierungssystem gemäß einem Ausführungsbeispiel der Erfindung; und
- Fig. 3: eine symbolhafte Darstellung von Teilaspekten eines Ausführungsbeispiels eines erfindungsgemäßen Verfahrens zur Bestimmung einer Nutzungsart eines Landmarkenmusters für eine Eigenlokalisierung eines Fahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

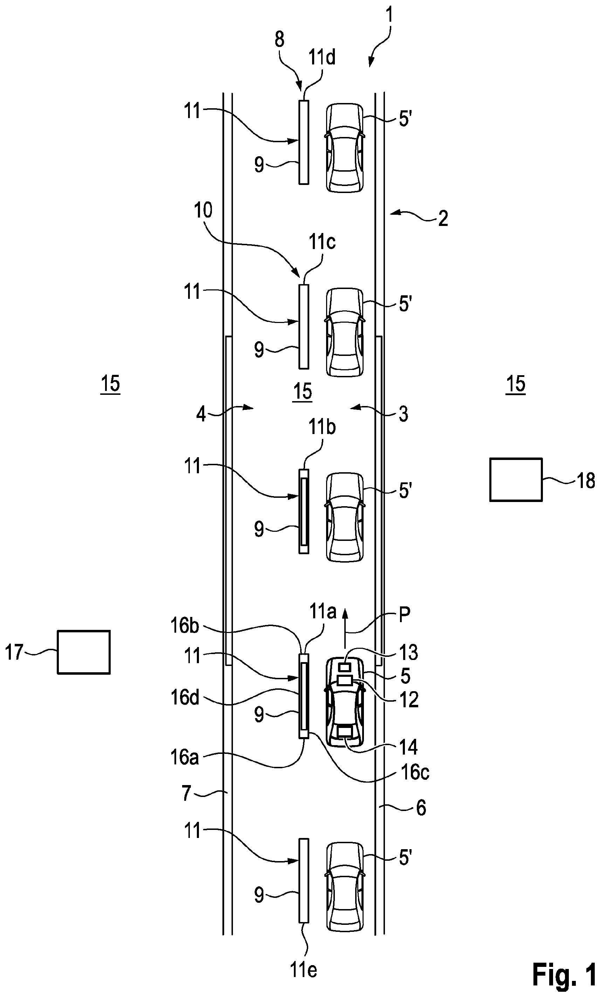

In Fig. 1 ist in einer schematischen Draufsicht eine Verkehrssituation 1 gezeigt. Die Verkehrssituation 1 zeigt einen Verkehrsweg 2, der zum Befahren mit einem Fahrzeug bestimmungsgemäß vorgesehen ist. Der Verkehrsweg 2 kann eine einspurige oder eine mehrspurige Straße sein. Im gezeigten Ausführungsbeispiel weist der Verkehrsweg 2 eine erste Fahrspur 3 auf. Darüber hinaus ist eine zweite Fahrspur 4 vorgesehen. Im Ausführungsbeispiel sind die beiden Fahrspuren 3 und 4 zum Befahren in entgegengesetzter Richtung vorgesehen. Der Verkehrsweg 2 kann jedoch auch zumindest zwei Fahrspuren aufweisen, die zum Befahren in eine gleiche Richtung vorgesehen sind. Beispielsweise kann dies eine Schnellstraße oder eine Autobahn sein. Im Ausführungsbeispiel ist ein Fahrzeug 5 gezeigt, welches hier auf der Fahrspur 3 entlangfährt. Das Fahrzeug 5 bewegt sich in Richtung des Pfeils P.

Im Ausführungsbeispiel ist der Verkehrsweg 2 seitlich durch Fahrbahnbegrenzungen 6 und 7 begrenzt. Dies können beispielsweise Bodenmarkierungen sein. Entsprechend können dies durchgezogene Linien sein. Ebenso ist es jedoch auch möglich, dass Teilbereiche dieser Fahrbahnbegrenzungen 6 und 7 keine Bodenmarkierungen sind, sondern beispielsweise Leitplanken sind. Diese können mit Stützpfeilern versehen sein, die beispielsweise im Boden befestigt sind.

Darüber hinaus ist zu erkennen, dass die Fahrspuren 3 und 4 durch eine Mittellinie 8 voneinander getrennt sind. Diese Mittellinie 8 ist hier eine gestrichelte Linie. Diese gestrichelte Linie wird durch Teilelemente 9 gebildet. Diese Teilelemente 9 sind Bodenmarkierungen. Sie sind beabstandet zueinander auf der Fahrbahn angeordnet und sind gleiche oder im Wesentlichen gleiche Teilelemente. Die Mittellinie 8 stellt im gezeigten Ausführungsbeispiel ein Beispiel für ein Landmarkenmuster 10 dar. Das Landmarkenmuster weist die Teilelemente 9 auf. Diese Teilelemente 9 stellen im Ausführungsbeispiel Landmarkenteile 11 dar. Somit ist das Landmarkenmuster 10 eine wiederholte Aneinanderreihung von diesen Landmarkenteilen 11. Die Landmarkenteile 11 sind rechteckförmige Streifen und definiert beabstandet zueinander.

Darüber hinaus ist in Fig. 1 ein elektronisches Eigenlokalisierungssystem 12 gezeigt. Dieses elektronische Eigenlokalisierungssystem 12 kann teilweise oder vollständig Bestandteil des Fahrzeugs 5 sein. Das Fahrzeug 5 kann beispielsweise ein Personenkraftwagen oder ein Lastkraftwagen sein.

Mit dem elektronischen Eigenlokalisierungssystem 12 ist eine Eigenlokalisierung des Fahrzeugs 5 und somit eine eigene Positionsbestimmung dieses Fahrzeugs 5 ermöglicht. Dieses elektronische Eigenlokalisierungssystem 12 weist zumindest eine Erfassungseinheit 13 auf. Die Erfassungseinheit 13 ist Bestandteil des Fahrzeugs 5. Die Erfassungseinheit 13 kann beispielsweise eine optische Erfassungseinheit sein. Insbesondere kann sie beispielsweise eine Kamera oder ein Lidar-Sensor sein.

Zusätzlich kann das Fahrzeug 5 auch noch weitere, vom Typ her andere Erfassungseinheiten aufweisen. Auch diese können Bestandteil des Eigenlokalisierungssystems 12 sein. Das elektronische Eigenlokalisierungssystem 12 weist darüber hinaus insbesondere eine Auswerteeinheit 14 auf.

Wird eine landmarkenbasierte Eigenlokalisierung durchgeführt, ist es besonders wichtig, dass die in der Umgebung des Fahrzeugs, hier des Fahrzeugs 5, erfassten Landmarken einerseits sehr genau erfasst werden können, andererseits möglichst eindeutig entsprechenden Elementen in einer digitalen, globalen Karte der Umgebung, die vorliegt und bereitgestellt ist, zugeordnet werden können. In dem Zusammenhang können auch Landmarkenmuster 10 und insbesondere die Landmarkenteile 11 mit der Erfassungseinheit 13 erfasst werden. Da die Landmarkenteile 11 gleich sind, ist es bei diesen Ausführungen besonders wichtig, die einzelnen Landmarkenteile auch den entsprechenden Pendants in der digitalen Karte eindeutig zuordnen zu können. Ist dies nicht möglich, kann eine genaue Positionsbestimmung nicht erfolgen oder grundsätzlich eine Positionsbestimmung nicht erfolgen. Dadurch kommt es aufgrund dieser fehlenden Zuordnung oder falscher Zuordnung zu sehr reduzierter Genauigkeit und deutlich erhöhter Unsicherheit bei der Eigenlokalisierung. Beispielhaft ist in dem Zusammenhang in Fig. 1 die Situation gezeigt, die derartige Mehrdeutigkeiten darstellt. Das Fahrzeug 5 ist in dem Zusammenhang in spezifischer Position zu dem Landmarkenteil 11a angeordnet. Ist eine eindeutige Zuordnung dieses Landmarkenteils 11a zu dem entsprechenden Landmarkenteil in der digitalen Karte nicht möglich, so kann die genaue Eigenlokalisierung des Fahrzeugs 5 nicht erfolgen. Denn das Fahrzeug 5 könnte dann, wie dies in Fig. 1 durch die gestrichelte Darstellung der Fahrzeuge 5' angezeigt ist, auch an den Positionen zu den weiteren anderen Landmarkenteilen 11b, 11c, 11d oder 11e sein. Da diese Landmarkenteile 11a bis 11e gleiche Form und insbesondere auch gleichen Abstand zueinander aufweisen, kann eine entsprechende Zuordnung zu Landmarkenteilen in der digitalen Karte nicht erfolgen.

Durch das elektronische Eigenlokalisierungssystem 12 sowie das nachfolgend erläuterte Verfahren können derartige Nachteile bei der landmarkenbasierten Eigenlokalisierung zumindest deutlich reduziert werden.

Bei dem Verfahren wird eine Bestimmung einer Nutzungsart des Landmarkenmusters 10 für eine landmarkenbasierte Eigenlokalisierung des Fahrzeugs 5 durchgeführt. Dabei wird in einem ersten Schritt eine digitale Karte des Umgebungsbereichs 15 des Fahrzeugs 1 bereitgestellt. Der Umgebungsbereich 15 wird mit zumindest der einen Erfassungseinheit 13 des Fahrzeugs 5 erfasst. Die erfassten Informationen werden dahingehend analysiert, ob zumindest ein Landmarkenteil 11a bis 11e des Landmarkenmusters 10 erfasst wurde. Ist zumindest ein derartiges Landmarkenteil 11a bis 11e erfasst, wird ein Zuordnen dieses erfassten Landmarkenteils 11a bis 11e zu dem korrespondierenden Landmarkenteil in der digitalen Karte versucht. Ist in dem Zusammenhang eine eindeutige Zuordnung des erfassten Landmarkenteils 11a bis 11e zu dem korrespondierenden Landmarkenteil in der digitalen Karte erfolgreich beziehungsweise möglich, so wird durch das elektronische Eigenlokalisierungssystem 12 das Landmarkenmuster 10, insbesondere zumindest ein erfasstes Landmarkenteil 11a bis 11e, für die Eigenlokalisierung des Fahrzeugs 5 gemäß einer ersten Nutzungsart genutzt. Ist eine derartige eindeutige Zuordnung des erfassten Landmarkenteils 11a bis 11e zu dem korrespondierenden Landmarkenteil in der digitalen Karte nicht möglich beziehungsweise nicht erfolgreich, so wird durch das elektronische Eigenlokalisierungssystem 12 das Landmarkenmuster, insbesondere zumindest ein Landmarkenteil 11a bis 11e, für die Eigenlokalisierung des Fahrzeugs 5 gemäß einer zur ersten Nutzungsart unterschiedlichen zweiten Nutzungsart genutzt.

Die zumindest zwei verschiedenen Nutzungsarten unterscheiden sich insbesondere in einem Genauigkeitsgrad, mit welchem die Eigenlokalisierung des Fahrzeugs 5 durchgeführt werden kann. Insbesondere weist die erste Nutzungsart einen höheren Genauigkeitsgrad auf als die zweite Nutzungsart. Insbesondere wird eine Eigenlokalisierung des Fahrzeugs 5 bei der ersten Nutzungsart in zwei Richtungen relativ zum Landmarkenmuster 10 durchgeführt.

Dies bedeutet, dass in dem gezeigten Ausführungsbeispiel in Fig. 1 dann, wenn beispielsweise eine eindeutige Zuordnung des Landmarkenteils 11a, welches erfasst wurde, zu dem korrespondierenden Landmarkenteil in der digitalen Karte erfolgreich war, die erste Nutzungsart zur Eigenlokalisierung des Fahrzeugs 5 durchgeführt wird. Bei dieser ersten Nutzungsart wird vorteilhafterweise ein erstes Ende 16a des Landmarkenteils 11a und/oder ein gegenüberliegendes zweites Ende 16b dieses Landmarkenteils 11a als Information zur Eigenlokalisierung des Fahrzeugs 5 genutzt. Es ist in dem Zusammenhang entlang der Längsachse dieses Landmarkenteils 11a und insbesondere somit in Richtung des Pfeils P, entlang welchem sich das Fahrzeug 5 auf der Fahrspur 3 bewegt, ein vorderes und ein hinteres Ende dieses Landmarkenteils 11a bekannt. Dadurch ist es ermöglicht, dass das Fahrzeug 5 in einer ersten Richtung, nämlich in einer longitudinalen Richtung, bezüglich seiner Position beurteilt wird. Das Fahrzeug 5 kann somit bei dieser ersten Nutzungsart des Landmarkenmusters 10 in dieser longitudinalen Richtung in seiner Position bestimmt werden. Zusätzlich kann bei dieser ersten Nutzungsart des zumindest einen Landmarkenteils 11a eine Position in einer zweiten Richtung bestimmt werden. Diese ist insbesondere senkrecht zur ersten Richtung. Insbesondere kann in dem Zusammenhang auch eine laterale Position des Fahrzeugs 5 zu diesem Landmarkenteil 11a bestimmt werden. Diese laterale Position ist somit quer zum Fahrweg 2 und somit in Richtung der Querachse des Fahrzeugs 5 bemessen.

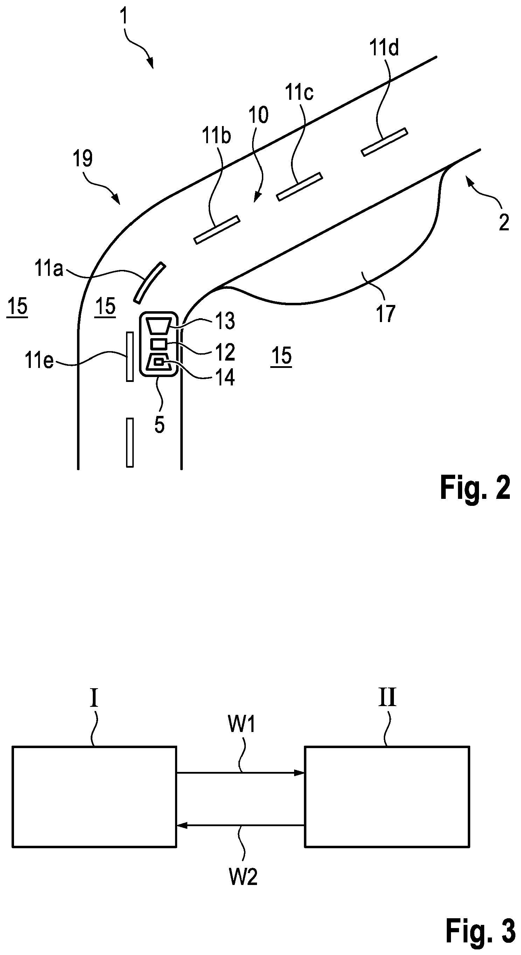

Die longitudinale Position ist insbesondere in Richtung der Längsachse des Fahrzeugs 5 zu verstehen. Es ist also bei diesem Szenario möglich, dass Mehrdeutigkeiten der Positionsinterpretation, wie es oben erläutert wurde, mit ausreichender Sicherheit aufgelöst werden können, so befindet sich das elektronische Eigenlokalisierungssystem 12 in einem ersten Zustand I, wie er auch in der beispielhaften Skizze in Fig. 3 dargestellt ist. In diesem ersten Zustand kann somit das zumindest eine Landmarkenteil 11a, insbesondere das gesamte Landmarkenmuster 10, gemäß dieser ersten Nutzungsart genutzt werden. Die gezeigten Liniensegmente, die beim erläuterten Ausführungsbeispiel die Landmarkenteile 11a bis 11e sind, können mit allen verfügbaren Informationen für die Eigenlokalisierung genutzt werden. Diese verfügbaren Informationen können zumindest die Informationen über die Enden 16a und 16b und/oder die Position über eine dem Fahrzeug 5 zugewandte Seitenbegrenzung 16c und/oder dem Fahrzeug 5 abgewandte Seitenbegrenzung 16d sein. Zusätzlich oder anstatt dazu kann auch gegebenenfalls die Geometrie des Landmarkenteils 11a und/oder die Höhe, die senkrecht zur Figurenebene bemessen ist, genutzt werden.

Insbesondere ist eine derartige Nutzungsmöglichkeit gemäß der ersten Art der Nutzung auch dann möglich, wenn weitere, nicht zu dem Landmarkenmuster 10 gehörende Landmarken im Umgebungsbereich 15 durch die Erfassungseinheit 13 erfasst wurden. Beispielsweise können derartige andere Landmarken 17 und 18, wie sie in Position, Anzahl und Ausgestaltung lediglich symbolhaft zu verstehen sind, Bäume, Gebäude, Verkehrsschilder und dergleichen sein. Die diesbezügliche Aufzählung ist lediglich beispielhaft zu verstehen und keinesfalls abschließend. Vielmehr können in dem Zusammenhang jegliche Ausgestaltungen eines Objekts im Umgebungsbereich 15 als eine derartige Landmarke, die insbesondere nicht zu einem Landmarkenmuster zugehörig ist, verstanden werden. Derartige eindeutige Landmarken 17, 18, die dann auch den entsprechenden Landmarken in der digitalen Karte eindeutig zugeordnet werden können, ermöglichen in einem Ausführungsbeispiel die indirekte Zuordnung eines Landmarkenteils 11a bis 11e zu dem korrespondierenden Landmarkenteil in der digitalen Karte.

Ist in einer anderen Situation die eindeutige Zuordnung eines Landmarkenteils 11a bis 11e, welches erfasst wurde, zu einem korrespondierenden Landmarkenteil in der digitalen Karte nicht möglich, so wird, wie dies bereits oben erläutert wurde, automatisch die zweite Nutzungsart des Landmarkenteils 11a bis 11e zugrundegelegt. Dies bedeutet, dass in einem derartigen Fall die Auflösung von Mehrdeutigkeit möglich ist und eine Verifikation fehlgeschlagen ist. In dem Zusammenhang geht das elektronische Eigenlokalisierungssystem 12 bezüglich des Durchführens einer Eigenlokalisierung in den Zustand II über, wie er in dem Symbolbild in Fig. 3 gezeigt ist. In diesem Zustand ist eine Eigenlokalisierung des Fahrzeugs 5 mit reduziertem Genauigkeitsgrad im Hinblick auf das genutzte Landmarkenmuster möglich. Insbesondere ist es in dieser zweiten Nutzungsart vorgesehen, dass die Eigenlokalisierung nur in einer Richtung relativ zum Landmarkenmuster 10, insbesondere nur in einer Richtung zu einem erfassten Landmarkenteil 11a bis 11e, durchgeführt wird. Da bei dieser zweiten Nutzungsart eine eindeutige Zuordnung eines Landmarkenteils 11a bis 11e zu einem korrespondierenden Landmarkenteil in der digitalen Karte nicht möglich ist und insbesondere nicht direkt möglich ist, wird das Landmarkenmuster durch das elektronische Eigenlokalisierungssystem 12 symbolisiert und geometrisch ähnlich im Vergleich zur tatsächlichen Geometrie des Landmarkenmusters 10, insbesondere der Landmarkenteile 11a bis 11d, genutzt. Im gezeigten Ausführungsbeispiel ist in dem Zusammenhang vorgesehen, dass das zumindest eine erfasste Landmarkenteil 11a, insbesondere mehrere erfasste Landmarkenteile 11a bis 11e, nicht mehr als einzelne Teilsegmente genutzt werden, sondern symbolisiert als unterbrechungsfrei zusammenhängende Linie. Dadurch ist im Ausführungsbeispiel kein Ende 16a und kein Ende 16b bekannt. Diese Informationen können daher für die Eigenlokalisierung bei dieser zweiten Nutzungsart nicht genutzt werden. Es ist dann bei dieser zweiten Nutzungsart vorgesehen, dass insbesondere nur eine laterale Positionsbestimmung des Fahrzeugs 5 zu diesem dann symbolisierten Landmarkenmuster in Form der durchgezogenen Linie bestimmt wird. Landmarkenteile 11a bis 11e werden dann als eine zusammengefügte Gesamtheit für die Eigenlokalisierung zugrundegelegt.

Es ist dann hier im Beispiel nur die laterale Position des Fahrzeugs 5 zu diesem Landmarkenmuster 10 bestimmbar.

Dies bedeutet auch, dass bei der ersten Nutzungsart zur Eigenlokalisierung des Fahrzeugs 5 die Menge der verfügbaren Informationen, insbesondere die Geometrie und/oder die Positionsinformationen, des jeweiligen zumindest einen Landmarkenteils 11a bis 11e des Landmarkenmusters 10 größer als bei der zweiten Nutzungsart ist.

Darüber hinaus ist es in einem vorteilhaften Ausführungsbeispiel vorgesehen, dass das elektronische Eigenlokalisierungssystem 12 überprüft, insbesondere kontinuierlich überprüft, ob ein Zustandswechsel von dem Zustand II in den Zustand I möglich ist. Ist dies mit ausreichender Sicherheit erreicht, erfolgt ein diesbezüglicher automatischer Wechsel in den Zustand I. Dies bedeutet, dass dann ein erfasstes Landmarkenteil eines Landmarkenmusters 10 gemäß der ersten Nutzungsart für die Eigenlokalisierung des Fahrzeugs 5 genutzt werden kann.

Die automatischen Wechsel beziehungsweise Übergänge sind in Fig. 3 durch Pfeile W1 und W2 gezeigt.

In einem vorteilhaften Ausführungsbeispiel ist dieses Verfahren zur Bestimmung einer Nutzungsart eines Landmarkenmusters 10 dann durchgeführt, wenn die Anzahl von anderweitigen Landmarken 17, 18 kleiner einem vorgebbaren Schwellwert ist. Dies ist insbesondere dann der Fall, wenn diese Zahl von anderweitigen Landmarken 17, 18 sehr gering ist oder keine derartigen weiteren Landmarken 17, 18 vorhanden sind und erfasst werden können. Denn dann ist eine Eigenlokalisierung nur anhand des Landmarkenmusters 10 vorgesehen. Anstelle, dass in dem Zusammenhang eine Eigenlokalisierung grundsätzlich gar nicht durchgeführt werden kann, ist es mit dem vorgeschlagenen Verfahren in sehr vorteilhafter Weise möglich, auch eine diesbezüglich reduzierte Eigenlokalisierung vornehmen zu können, was auf Basis der zweiten Nutzungsart des Landmarkenmusters erfolgt.

Möglich ist es auch, dass dann, wenn eine eindeutige Zuordnung der Landmarkenteile 11a bis 11e, welche erfasst wurden, zu korrespondierenden Landmarkenteilen der digitalen Karte nicht möglich ist, derartige, zusätzliche Landmarken 17, 18, wenn sie vorhanden sind oder erfasst wurden, genutzt werden können. Dies um auf Basis dieser dann eindeutig zuzuordnen Landmarken 17, 18 zu korrespondierenden Landmarken in der digitalen Karte auch auf die dann eindeutigen Positionen der Landmarkenteile 11a bis 11e des Landmarkenmusters 10 schließen zu können beziehungsweise diese geschätzt werden können und den korrespondierenden Landmarkenteilen in der digitalen Karte zugeordnet werden können. Somit kann quasi die indirekte eindeutige Zuordnung von derartigen Landmarkenteilen 11a bis 11e zu den korrespondierenden Landmarkenteilen in der digitalen Karte erfolgen.

Derartige zusätzliche Landmarken 17, 18 können beispielsweise auch Parkbuchten oder Notfallbuchten sein, wie dies in Fig. 2 beispielhaft gezeigt ist. Derartige Landmarken sind keinem Landmarkenmuster zugehörig und die Position ist in dem Zusammenhang eindeutig bekannt und eine entsprechende eindeutige Zuordnung zu den korrespondierenden Landmarken 17, 18 in der digitalen Karte ist möglich. Es kann auch hier wiederum über die Positionszuordnung einer derartigen Landmarke 17, 18 zu einem Landmarkenteil 11a bis 11e und eine daraus folgende eindeutige Zuordnung eines Landmarkenteils 11a bis 11e zu den korrespondierenden Landmarkenteilen in der digitalen Karte erfolgen.

Insbesondere dann, wenn sich das Fahrzeug 5 in einem landmarkenarmen Fortbewegungsabschnitt des Verkehrswegs 2 befindet, ist das vorgeschlagene Verfahren besonders vorteilhaft. Insbesondere auch dann, wenn zusätzlich oder anstatt dazu ein GNSS-Signal nicht oder nicht ausreichend zur Verfügung steht. Dies kann beispielsweise der Fall sein, wenn der Fortbewegungsabschnitt eingehaust ist. Beispielsweise kann dieser Fortbewegungsabschnitt in einem Tunnel sein. Gerade bei derartigen Fortbewegungsabschnitten, wie sie diesbezüglich spezifiziert sind, ist üblicherweise allenfalls eine sehr geringe Anzahl von nicht einem Landmarkenmuster zugehörigen Landmarken 17, 18 gegeben. Da gegebenenfalls auch kein GNSS-Signal zur Verfügung ist, und gegebenenfalls nur ein Landmarkenmuster 10 aus sich wiederholenden gleichen Landmarkenteilen 11a bis 11e vorliegt, ist das vorgeschlagene Verfahren in dem Zusammenhang dann besonders vorteilhaft.

Daher ist es hier besonders vorteilhaft, wenn auch beispielsweise während einer Fortbewegungsfahrt des Fahrzeugs 5 beispielsweise auch weitere Landmarken 17, 18 vorhanden sind und erfasst werden können und zumindest anhand dieser Landmarken 17, 18 eine Eigenlokalisierung des Fahrzeugs 5 möglich ist. Inwieweit dann dazu auch noch zusätzlich das Landmarkenmuster 10 zur Eigenlokalisierung herangezogen wird, ist offen. Es kann erfolgen, muss in diesen Situationen jedoch nicht erfolgen. Ist jedoch bei weiterer Fortbewegungsfahrt dann eine Situation gegeben, bei welcher die Landmarken 17, 18 nicht mehr oder nur noch im deutlich reduzierten Maße vorhanden sind, wird vorzugsweise zumindest dann das oben vorgeschlagene Szenario durchgeführt. Beispielsweise kann in dem Zusammenhang beim Einfahren in einen Tunnel die Situation vorliegen, dass durch die Landmarken 17, 18, an denen bereits vorbeigefahren wurde, eine ausreichende Eigenlokalisierung ermöglicht wird. Fährt das Fahrzeug 5 im Weiteren tiefer in den Tunnel ein und ist dann beispielsweise kein GNSS-Signal mehr vorhanden und/oder keine Landmarken 17, 18 mehr vorhanden und erfassbar und/oder Teilstücke des Verkehrswegs 2 weisen keine anderweitigen Landmarken auf, so kann insbesondere nur noch auf Basis eines diesbezüglichen Landmarkenmusters 10 die Eigenlokalisierung gemäß dem oben erläuterten Verfahren erfolgen. Insbesondere ist dann gegebenenfalls auch die Fahrzeugodometrie fehlerhaft und kann auch nicht zur Eigenlokalisierung des Fahrzeugs 5 mit ausreichender Genauigkeit beitragen. Erfolgt in weiteren Fortbewegungsfahrten des Fahrzeugs 5 dann wiederum ein Verlassen dieses Fortbewegungsabschnitts, beispielsweise ein Herausfahren aus einem Tunnel, kann im Weiteren dann wiederum das Erfassen von Landmarken 17, 18 erfolgen und diese können dann wiederum auch Basis der landmarkenbasierten Eigenlokalisierung sein.

In Fig. 1 ist eine Situation gezeigt, bei welcher der Verkehrsweg 2 geradlinig oder im Wesentlichen geradlinig ausgebildet ist. Dieser Verlauf des Verkehrswegs 2 hat somit keinen charakteristischen Verlaufsabschnitt.

In Fig. 2 ist beispielhaft eine entsprechende Draufsicht auf eine Verkehrssituation 1 gezeigt. Bei dieser ist der Verkehrsweg 2 jedoch mit einem charakteristischen Verlaufsabschnitt 19 ausgebildet. Dieser charakteristische Verlaufsabschnitt 19 kann beispielsweise eine relativ starke Kurve beziehungsweise ein Knick im Fahrbahnverlauf sein. Da dieser örtlich sehr exakt bekannt ist und eindeutig ist, kann bei einem Erfassen dieses charakteristischen Verlaufsabschnitts 19 wiederum eine eindeutige Zuordnung zu dem entsprechenden korrespondierenden Verlaufsabschnitt 19 in der digitalen Karte erfolgen. Da in dem Zusammenhang dann auch insbesondere die Positionszuordnungen zwischen dem charakteristischen Verlaufsabschnitt 19 und zumindest einem erfassten Landmarkenteil 11a bis 11e des Landmarkenmusters 10 ermöglicht ist, kann auch hier wiederum auf Basis dieser Informationen dann eine eindeutige Zuordnung eines erfassten Landmarkenteils 11a bis 11e zu einem korrespondierenden Landmarkenteil in der digitalen Karte indirekt erfolgen. Somit ist auch durch derartige charakteristische Verlaufsabschnitte 19, die keine Landmarken 17, 18 als solche darstellen, eine indirekte Zuordnung eines Landmarkenteils 11a bis 11e zu dem korrespondierenden Landmarkenteil in der digitalen Karte ermöglicht. Damit kann auch in derartigen Situationen, bei welchen ein erfasstes Landmarkenteil 11a bis 11e nicht eindeutig einem korrespondierenden Landmarkenteil der digitalen Karte zugeordnet werden kann und somit eigentlich gemäß der zweiten Nutzungsart genutzt werden müsste, dennoch eine indirekte eindeutige Zuordnung erfolgen und es kann dann vorteilhafterweise die erste Nutzungsart dieses Landmarkenteils 11a bis 11e erfolgen.

In dem Zusammenhang ist es auch möglich, dass bei Vorhandensein eines derartigen charakteristischen Verlaufsabschnitts 19 die vergangene Historie betrachtet wird, wie die einzelnen Landmarkenteile 11a bis 11e gesehen wurden. Diesbezüglich wird dann eine lokale Karte aufgebaut und ein Muster des Fahrbahnverlaufs gebildet.

In den oben genannten Beispielen, in denen eine eindeutige Zuordnung eines Landmarkenteils 11a bis 11e zu einem korrespondierenden Landmarkenteil in der digitalen Karte nicht möglich ist, kann es jedoch auch anderweitig zu einem derartigen nicht erfolgreichen Zuordnen kommen. Beispielsweise kann dies dann der Fall sein, wenn ein Landmarkenteil verändert wurde. Beispielsweise kann dies bei einer Bodenmarkierung wie bei einem Teilelement 9 der Fall sein, wenn ein neuer Farbauftrag erfolgt ist. In dem Zusammenhang kann es vorkommen, dass die alte Farbgebung nicht vollständig von der Fahrbahn abgetragen ist und die neu aufgebrachte Farbe örtlich dazu etwas versetzt ist. Hierdurch ergibt sich gegebenenfalls ein Teilelement 9, welches gegenüber dem alten Teilelement 9 verlängert oder in der Position versetzt ist. Da sich auch dadurch Mehrdeutigkeiten ergeben können, ist auch in derartigen Situationen das oben erläuterte Verfahren sehr vorteilhaft. Denn auch dann, wenn bei dieser Situation die Mehrdeutigkeit nicht aufgelöst werden kann, ist eine Nutzung dieses Landmarkenteils, insbesondere des gesamten Landmarkenmusters 10, auf Basis der zumindest zweiten Nutzungsart ermöglicht.

### Bezugszeichenliste

- 1: Verkehrssituation
- 2: Verkehrsweg
- 3: Fahrspur
- 4: Fahrspur
- 5, 5': Fahrzeug
- 6: Fahrbahnbegrenzung
- 7: Fahrbahnbegrenzung
- 8: Mittellinie
- 9: Teilelement
- 10: Landmarkenmuster
- 11: Landmarkenteil
- 11a: Landmarkenteil
- 11b: Landmarkenteil
- 11c: Landmarkenteil
- 11d: Landmarkenteil
- 11e: Landmarkenteil
- 12: Eigenlokalisierungssystem
- 13: Erfassungseinheit
- 14: Auswerteeinheit
- 15: Umgebungsbereich
- 16a: erstes Ende
- 16b: zweites Ende
- 16c: Seitenbegrenzung
- 16d: Seitenbegrenzung
- 17: Landmarke
- 18: Landmarke
- 19: Verlaufsabschnitt
- P: Pfeil
- W1: Pfeil
- W2: Pfeil
- I: Zustand
- II: Zustand

## Patentansprüche

1. Verfahren zur Bestimmung einer Nutzungsart eines Landmarkenmusters (10) für eine Eigenlokalisierung eines Fahrzeugs (5), wobei das Landmarkenmuster (10) in einem Umgebungsbereich (15) des Fahrzeugs (5) angeordnet ist, und welches mehrere gleiche Landmarkenteile (11a, 11b, 11c, 11d, 11e) zur Bildung des Landmarkenmusters (10) aufweist, bei welchem folgende Schritte durchgeführt werden:
- Bereitstellen einer digitalen Karte des Umgebungsbereichs (15), die das Landmarkenmuster (10) aufweist;
- Erfassen des Umgebungsbereichs (15) mit zumindest einer Erfassungseinheit (12) des Fahrzeugs (5);
- Analysieren der erfassten Informationen dahingehend, ob zumindest ein Landmarkenteil (11a bis 11e) des Landmarkenmusters (10) erfasst wurde;
- Falls ein Landmarkenteil (11a bis 11e) erfasst wurde, wird ein Zuordnen dieses Landmarkenteils (11a bis 11e) zu dem korrespondierenden Landmarkenteil in der digitalen Karte versucht;
- Nutzung des Landmarkenmusters (10) für die Eigenlokalisierung des Fahrzeugs (5) gemäß einer ersten Nutzungsart, falls eine eindeutige Zuordnung des erfassten Landmarkenteils (11a bis 11e) zu dem korrespondierenden Landmarkenteil in der digitalen Karte erfolgreich war, **gekennzeichnet durch**:
- Nutzung des Landmarkenmusters (10) für die Eigenlokalisierung des Fahrzeugs (5) gemäß einer zu ersten Nutzungsart unterschiedlichen zweiten Nutzungsart, falls eine eindeutige Zuordnung des erfassten Landmarkenteils (11a bis 11e) zu dem korrespondierenden Landmarkenteil in der digitalen Karte nicht erfolgreich war.

2. Verfahren nach Anspruch 1, wobei sich die Nutzungsarten in einem Genauigkeitsgrad der Eigenlokalisierung unterscheiden und die erste Nutzungsart mit einem höheren Genauigkeitsgrad vorgegeben wird, als die zweite Nutzungsart .

3. Verfahren nach Anspruch 1 oder 2, wobei eine Eigenlokalisierung des Fahrzeugs (5) bei der ersten Nutzungsart in zwei Richtungen relativ zum Landmarkenmuster (10) durchgeführt wird und eine Eigenlokalisierung des Fahrzeugs (5) bei der zweiten Nutzungsart nur in einer der beiden Richtungen in Bezug zum Landmarkenmuster (10) durchgeführt wird.

4. Verfahren nach Anspruch 3, wobei bei der ersten Nutzungsart zur Eigenlokalisierung des Fahrzeugs (5) in Fahrtrichtung (P) des Fahrzeugs (5) betrachtet eine laterale Position des Fahrzeugs (5) zum Landmarkenteil (11a bis 11e), insbesondere zum Landmarkenmuster (10), und eine longitudinale Position des Fahrzeugs (5) zum Landmarkenteil (11a bis 11e), insbesondere zum Landmarkenmuster (10), bestimmt wird, und bei der zweiten Nutzungsart zur Eigenlokalisierung des Fahrzeugs (5) in Fahrtrichtung (P) des Fahrzeugs (5) betrachtet nur eine laterale Position des Fahrzeugs (5) zum Landmarkenteil (11a bis 11e), insbesondere zum Landmarkenmuster (10), bestimmt wird.

5. Verfahren nach einem der vorehrgehenden Ansprüche, wobei bei der ersten Nutzungsart zur Eigenlokalisierung des Fahrzeugs (5) die Menge der verfügbaren Informationen, insbesondere Geometrie und/oder Positionsinformationen, des Landmarkenteils (11a bis 11e) größer als bei der zweiten Nutzungsart ist.

6. Verfahren nach einem der vorhergehenden Ansprüche, wobei bei der ersten Nutzungsart die einzelnen, erfassten Landmarkenteile (11a bis 11e) des Landmarkenmusters (10) jeweils zur Eigenlokalisierung genutzt werden und bei der zweiten Nutzungsart das Landmarkenmuster (10) nur symbolisiert und geometrisch ähnlich im Vergleich zur tatsächlichen Geometrie für die Eigenlokalisierung genutzt wird, indem Landmarkenteile (11a bis 11e) als eine zusammengefügte, unterbrechungsfreie Gesamtheit zu Grunde gelegt wird.

7. Verfahren nach einem der vorhergehenden Ansprüche, wobei zumindest dann, wenn aktuell eine Nutzung des Landmarkenmusters (10), insbesondere zumindest eines Landmarkenteils (11a bis 11e), nur gemäß der zweiten Nutzungsart möglich ist, beim weiteren Fortbewegen des Fahrzeugs (5) überprüft wird, ob wieder eine erste Nutzungsart des Landmarkenmusters (10), insbesondere zumindest eines Landmarkenteils (11a bis 11e) möglich ist.

8. Verfahren nach Anspruch 7, wobei bei dem Prüfen abhängig von der Möglichkeit, ob in dem Umgebungsbereich (15) weitere Landmarken (17, 18), die nicht zum Landmarkenmuster (10) und/oder nicht zu einem anderen Landmarkenmuster (10) zugehörig sind, erfasst werden können und dann, falls derartige weitere Landmarken (17, 18) erfasst wurden eine Zuordnung dieser erfassten Landmarke (17, 18) zu der korrespondierenden Landmarke in der digitalen Karte erfolgt, wobei dann, wenn eine Zuordnung erfolgreich war, abhängig von dieser Zuordnung ein eindeutiges Zuordnen eines erfassten Landmarkenteils (11a bis 11e) des Landmarkenmusters (10) zu dem korrespondierenden Landmarkenteil in der digitalen Karte ermöglicht wird und diese eindeutige Zuordnung durchgeführt wird.

9. Verfahren nach einem der vorhergehenden Ansprüche, wobei das Verfahren bei einem Einfahren in und/oder bei einem Befahren von und/oder bei einem Ausfahren aus einen eingehausten Verkehrsweg (2), insbesondere einen Tunnel oder dergleichen durchgeführt wird.

10. Verfahren nach einem der vorhergehenden Ansprüche, wobei das Verfahren zumindest bei einem Befahren eines Fortbewegungsabschnitt des Fahrzeugs (5) auf einem Verkehrsweg (2) durchgeführt wird, bei welchem zumindest teilweise kein GNSS-Signal vom Fahrzeug (5) empfangen werden kann.

11. Verfahren nach einem der vorhergehenden Ansprüche, wobei ein Verlauf eines Fortbewegungsabschnitt, auf dem sich das Fahrzeugs (5) auf einem Verkehrsweg (2) fortbewegt, erfasst wird und charakteristische, nicht-geradlinige Verlaufsabschnitte (19) erkannt werden, wobei in der digitalen Karte eine Karten-Zuordnung zwischen einem charakteristischen Verlaufsabschnitt (19) und einem Landmarkenteil (11a bis 11e) des Landmarkenmusters (10) als Karteninformation bekannt ist, und abhängig von dieser Karteninformation ein erfasstes Landmarkenteil (11a bis 11e) dem erfassten charakteristischen Verlaufsabschnitt (19) eindeutig zugeordnet wird, so dass abhängig von dieser Zuordnung das erfasste Landmarkenteil (11a bis 11e) dem korrespondierenden Landmarkenteil in der digitalen Karte zugeordnet werden kann und die erste Nutzungsart des Landmarkenteils (11a bis 11e) ermöglicht wird.

12. Verfahren nach Anspruch 11, wobei die Karten-Zuordnung auf Basis von in der Vergangenheit erfassten Landmarkenteilen (11a bis 11e) und deren Zuordnung zu charakteristischen Verlaufsabschnitten (19) erstellt wird.

13. Verfahren nach einem der vorhergehenden Ansprüche, wobei ein Wechsel zwischen den beiden Nutzungsarten abhängig von erfassten Landmarken (17, 18) im Umgebungsbereich (15) und dem Umfang von Zuordnungsmöglichkeiten zu Landmarken (17, 18) in der digitalen Karte automatisch durchgeführt wird.

14. Verfahren nach einem der vorhergehenden Ansprüche, wobei das Verfahren dann durchgeführt wird, wenn aktuell nur eine Anzahl von nicht einem Landmarkenmuster zugehörigen Landmarken (17, 18) kleiner einem vorgegebenen Schwellwert durch die Erfassungseinheit (13) erfasst werden können.

15. Elektronisches Eigenlokalisierungssystem (12) für ein Fahrzeug (5), welches zumindest eine Erfassungseinheit (13) zum Erfassen des Umgebungsbereichs (15) des Fahrzeugs (5) und eine Auswerteeinheit (14) zum Auswerten der erfassten Informationen aufweist, wobei das Eigenlokalisierungssystem (12) zum Durchführen eines Verfahrens zur Bestimmung einer Nutzungsart eines Landmarkenmusters (10) für eine Eigenlokalisierung des Fahrzeugs (5), wobei das Landmarkenmuster (10) in dem Umgebungsbereich (15) des Fahrzeugs (5) angeordnet ist, und welches mehrere gleiche Landmarkenteile (11a bis 11e) zur Bildung des Landmarkenmusters (10) aufweist, ausgebildet ist, bei welchem folgende Schritte durchgeführt werden:
- Bereitstellen einer digitalen Karte des Umgebungsbereichs (15), die das Landmarkenmuster (10) aufweist;
- Erfassen des Umgebungsbereichs (15) mit zumindest einer Erfassungseinheit (12) des Fahrzeugs (5);
- Analysieren der erfassten Informationen dahingehend, ob zumindest ein Landmarkenteil (11a bis 11e) des Landmarkenmusters (10) erfasst wurde;
- Falls ein Landmarkenteil (11a bis 11e) erfasst wurde, wird ein Zuordnen dieses Landmarkenteils (11a bis 11e) zu dem korrespondierenden Landmarkenteil in der digitalen Karte versucht;
- Nutzung des Landmarkenmusters (10) für die Eigenlokalisierung des Fahrzeugs (5) gemäß einer ersten Nutzungsart, falls eine eindeutige Zuordnung des erfassten Landmarkenteils (11a bis 11e) zu dem korrespondierenden Landmarkenteil in der digitalen Karte erfolgreich war, **gekennzeichnet durch**:
- Nutzung des Landmarkenmusters (10) für die Eigenlokalisierung des Fahrzeugs (5) gemäß einer zu ersten Nutzungsart unterschiedlichen zweiten Nutzungsart, falls eine eindeutige Zuordnung des erfassten Landmarkenteils (11a bis 11e) zu dem korrespondierenden Landmarkenteil in der digitalen Karte nicht erfolgreich war.

## Claims

1. Method for determining a usage type of a landmark pattern (10) for the self-localization of a vehicle (5), wherein the landmark pattern (10) is arranged in a surrounding area (15) of the vehicle (5) and comprises multiple identical landmark parts (11a, 11b, 11c, 11d, 11e) for forming the landmark pattern (10), wherein the following steps are performed:
- Providing a digital map of the surrounding area (15) that contains the landmark pattern (10);
- - Capturing the surrounding area (15) with at least one sensing unit (12) of the vehicle (5);
- Analyzing the captured information to determine whether at least one landmark part (11a-11e) of the landmark pattern (10) has been captured;
- If a landmark part (11a-11e) has been captured, attempting to associate that landmark part (11a-11e) with the corresponding landmark part in the digital map;
- Using the landmark pattern (10) for the self-localization of the vehicle (5) according to a first usage type, if a unique association of the captured landmark part (11a-11e) with the corresponding landmark part in the digital map was successful, **characterized by**:
- Using the landmark pattern (10) for the self-localization of the vehicle (5) according to a second usage type that differs from the first usage type, if a unique association of the captured landmark part (11a-11e) with the corresponding landmark part in the digital map was not successful.

2. Method of claim 1, wherein the usage types differ in the accuracy level of the self-localization, and the first usage type is specified with a higher accuracy level than the second usage type.

3. Method of claim 1 or 2, wherein a self-localization of the vehicle (5) in the first usage type is performed in two directions relative to the landmark pattern (10), and a self-localization of the vehicle (5) in the second usage type is performed only in one of the two directions relative to the landmark pattern (10).

4. Method of claim 3, wherein in the first usage type for self-localization of the vehicle (5) in the vehicle's heading direction (P) the lateral position of the vehicle (5) relative to the landmark part (11a-11e), in particular to the landmark pattern (10), and the longitudinal position of the vehicle (5) relative to the landmark part (11a-11e), in particular to the landmark pattern (10), are determined; and in the second usage type for self-localization of the vehicle (5) in the vehicle's heading direction (P), only the lateral position of the vehicle (5) relative to the landmark part (11a-11e), in particular to the landmark pattern (10), is determined.

5. Method according to any of the preceding claims, wherein in the first usage type for self-localization of the vehicle (5) the amount of available information, in particular geometry and/or position information, of the landmark part (11a-11e) is greater than in the second usage type.

6. Method according to any of the preceding claims, wherein in the first usage type the individual captured landmark parts (11a-11e) of the landmark pattern (10) are each used for self-localization, and in the second usage type the landmark pattern (10) is used only symbolically and geometrically similar compared to the actual geometry for self-localization, by treating the landmark parts (11a-11e) as a combined, continuous whole as the basis.

7. Method according to any of the preceding claims, wherein at least when a current use of the landmark pattern (10), in particular at least one landmark part (11a-11e), is only possible according to the second usage type, during subsequent movement of the vehicle (5) it is checked whether a first usage type of the landmark pattern (10), in particular at least one landmark part (11a-11e), is again possible.

8. Method of claim 7, wherein during the check, depending on the possibility that additional landmarks (17, 18) that do not belong to the landmark pattern (10) and/or to another landmark pattern (10) can be captured in the surrounding area (15), and then, if such additional landmarks (17, 18) are captured, an association of the captured landmark (17, 18) with the corresponding landmark in the digital map is performed, whereby if an association is successful, depending on this association a unique association of a captured landmark part (11a-11e) of the landmark pattern (10) with the corresponding landmark part in the digital map is enabled and this unique association is performed.

9. Method according to any of the preceding claims, wherein the method is performed when entering and/or traversing and/or exiting an enclosed roadway (2), in particular a tunnel or the like.

10. Method according to any of the preceding claims, wherein the method is performed at least when a section of movement of the vehicle (5) on a roadway (2) is traversed, in which at least partially no GNSS signal can be received by the vehicle (5).

11. Method according to any of the preceding claims, wherein a trajectory of a movement section on which the vehicle (5) moves on a roadway (2) is captured and characteristic, non-straight trajectory sections (19) are detected, wherein in the digital map a map association between a characteristic trajectory section (19) and a landmark part (11a-11e) of the landmark pattern (10) is known as map information, and depending on this map information a captured landmark part (11a-11e) is uniquely associated with the captured characteristic trajectory section (19), so that depending on this association the captured landmark part (11a-11e) can be associated with the corresponding landmark part in the digital map and the first usage type of the landmark part (11a-11e) is enabled.**

12. Method of claim 11, wherein the map association is created based on landmark parts (11a-11e) captured in the past and their association to characteristic trajectory sections (19).**

13. Method according to any of the preceding claims, wherein a switch between the two usage types is performed automatically depending on captured landmarks (17, 18) in the surrounding area (15) and the extent of association possibilities to landmarks (17, 18) in the digital map.**

14. Method according to any of the preceding claims, wherein the method is performed when currently only a number of landmarks (17, 18) not belonging to a landmark pattern can be captured by the sensing unit (13) below a predetermined threshold.**

15. Electronic self-localization system (12) for a vehicle (5) that comprises at least one sensing unit (13) for capturing the surrounding area (15) of the vehicle (5) and an evaluation unit (14) for evaluating the captured information, wherein the self-localization system (12) is configured to perform a method for determining a usage type of a landmark pattern (10) for the self-localization of the vehicle (5), wherein the landmark pattern (10) is arranged in the surrounding area (15) of the vehicle (5) and comprises multiple identical landmark parts (11a-11e) for forming the landmark pattern (10), wherein the following steps are performed:
- Providing a digital map of the surrounding area (15) that contains the landmark pattern (10);
- Capturing the surrounding area (15) with at least one sensing unit (12) of the vehicle (5);
- Analyzing the captured information to determine whether at least one landmark part (11a-11e) of the landmark pattern (10) has been captured;
- If a landmark part (11a-11e) has been captured, attempting to associate that landmark part (11a-11e) with the corresponding landmark part in the digital map;
- Using the landmark pattern (10) for the self-localization of the vehicle (5) according to a first usage type, if a unique association of the captured landmark part (11a-11e) with the corresponding landmark part in the digital map was successful, **characterized by**:
- Using the landmark pattern (10) for the self-localization of the vehicle (5) according to a second usage type that differs from the first usage type, if a unique association of the captured landmark part (11a-11e) with the corresponding landmark part in the digital map was not successful.

## Revendications

1. Procédé de détermination d'un type d'utilisation d'un motif de points de repère (10) destiné à une localisation autonome d'un véhicule (5), le motif de points de repère (10) étant agencé dans une région environnante (15) du véhicule (5), et présentant de multiples parties de points de repère identiques (11a, 11b, 11c, 11d, 11e) afin de former le motif de points de repère (10), les étapes suivantes étant effectuées :
- fourniture d'une carte numérique de la région environnante (15) comprenant le motif de points de repère (10) ;
- détection de la zone environnante (15) au moyen d'au moins une unité de détection (12) du véhicule (5) ;
- analyse des informations détectées pour déterminer si au moins une partie de point de repère (11a à 11e) du motif de points de repère (10) a été détectée ;
- si une partie de point de repère (11a à 11e) a été détectée, réalisation d'une tentative d'association de cette partie de point de repère (11a à 11e) à la partie de point de repère correspondante dans la carte numérique ;
- utilisation du motif de points de repère (10) pour la localisation autonome du véhicule (5) selon un premier type d'utilisation si une association unique de la partie de point de repère détectée (11a à 11e) à la partie de point de repère correspondante dans la carte numérique a réussi, **caractérisé par** :
- l'utilisation du motif de points de repère (10) pour la localisation autonome du véhicule (5) selon un second type d'utilisation différent du premier type d'utilisation si une association unique de la partie de point de repère détectée (11a à 11e) à la partie de point de repère correspondante dans la carte numérique n'a pas réussi.

2. Procédé selon la revendication 1, dans lequel les types d'utilisation diffèrent par un degré de précision de la localisation autonome et le premier type d'utilisation est prédéfini avec un degré de précision plus élevé que le second type d'utilisation.

3. Procédé selon la revendication 1 ou 2, dans lequel une localisation autonome du véhicule (5) selon le premier type d'utilisation est effectuée dans deux directions par rapport au motif de points de repère (10) et une localisation autonome du véhicule (5) selon le second type d'utilisation est effectuée uniquement dans l'une des deux directions par rapport au motif de points de repère (10).

4. Procédé selon la revendication 3, dans lequel, selon le premier type d'utilisation destiné à la localisation autonome du véhicule (5), vu dans le sens de déplacement (P) du véhicule (5), une position latérale du véhicule (5) par rapport à la partie de point de repère (11a à 11e), en particulier par rapport au motif de points de repère (10), et une position longitudinale du véhicule (5) par rapport à la partie de point de repère (11a à 11e), en particulier par rapport au motif de points de repère (10), est déterminée, et selon le second type d'utilisation destiné à la localisation autonome du véhicule (5), vu dans le sens de déplacement (P) du véhicule (5), seule une position latérale du véhicule (5) par rapport à la partie de point de repère (11a à 11e), en particulier par rapport au motif de points de repère (10), est déterminée.

5. Procédé selon l'une des revendications précédentes, dans lequel, selon le premier type d'utilisation destiné à la localisation autonome du véhicule (5), la quantité d'informations disponibles, en particulier des informations de géométrie et/ou de position, de la partie de point de repère (11a à 11e) est supérieur à celle du second type d'utilisation.

6. Procédé selon l'une des revendications précédentes, dans lequel, selon le premier type d'utilisation, les différentes parties de points de repère (11a à 11e) détectes du motif de points de repère (10) sont utilisées respectivement pour la localisation autonome et, selon le second type d'utilisation, le motif de points de repère (10) n'est utilisé que symboliquement et géométriquement de la même manière que la géométrie réelle pour la localisation autonome en utilisant des parties de points de repère (11a à 11e) comme base sous la forme d'un ensemble combiné et ininterrompu.

7. Procédé selon l'une des revendications précédentes, dans lequel, au moins lorsque l'utilisation du motif de points de repère (10), en particulier d'au moins une partie de point de repère (11a à 11e), n'est actuellement possible que dans le cas du second type d'utilisation, lorsque le véhicule (5) continue de se déplacer, il est vérifié si un premier type d'utilisation du motif de points de repère (10), en particulier d'au moins une partie de point de repère (11a à 11e), est à nouveau possible.

8. Procédé selon la revendication 7, dans lequel, lors de la vérification, en fonction de la possibilité que d'autres points de repère (17, 18) qui ne sont pas associés au motif de points de repère (10) et/ou à un autre motif de points de repère (10) puissent être détectés dans la zone environnante (15) puis si de tels autres points de repère (17, 18) ont été détectés, une association de ce point de repère détecté (17, 18) au point de repère correspondant dans la carte numérique est effectuée, dans lequel, lorsqu'une association a réussi, une association unique d'une partie de point de repère détectée (11a à 11e) du motif de points de repère (10) à la partie de point de repère correspondante dans la carte numérique est rendue possible en fonction de cette association, et cette association unique est effectuée.

9. Procédé selon l'une des revendications précédentes, **caractérisé en ce que** le procédé est mis en œuvre lors de l'entrée et/ou lors du passage et/ou lors de la sortie d'une voie de circulation (2) aménagée, en particulier d'un tunnel ou analogue.

10. Procédé selon l'une des revendications précédentes, le procédé étant mis en œuvre au moins lors du passage sur une section de déplacement du véhicule (5) sur une voie de circulation (2), dans lequel au moins en partie, aucun signal GNSS ne peut être reçu par le véhicule (5).

11. Procédé selon l'une des revendications précédentes, dans lequel un profil d'une section de déplacement sur laquelle le véhicule (5) se déplace sur une voie de circulation (2) est détecté et des sections de profil caractéristiques non rectilignes (19) sont identifiées, une association de carte entre une section de profil caractéristique (19) et une partie de point de repère (11a à 11e) ans la carte numérique. du motif de points de repère (10) étant connue en tant qu'informations cartographiques et, en fonction de ces informations cartographiques, une partie de point de repère détectée (11a à 11e) étant associée de manière unique à la partie de profil caractéristique détectée (19), de sorte que, en fonction de cette association, la partie de point de repère détectée (11a à 11e) peut être associée à la partie de point de repère correspondante dans la carte numérique et que le premier type d'utilisation de la partie de point de repère (11a à 11e) est rendu possible.

12. Procédé selon la revendication 11, dans lequel l'association de carte est créée sur la base de parties de points de repère (11a à 11e) détectées dans le passé et de leur association à des sections de profil caractéristiques (19).

13. Procédé selon l'une des revendications précédentes, dans lequel un basculement entre les deux types d'utilisation est effectué automatiquement sur la base de points de repère (17, 18) détectés dans la zone environnante (15) et de la portée des possibilités d'association à des points de repère (17, 18) dans la carte numérique.

14. Procédé selon l'une des revendications précédentes, dans lequel le procédé est mis en œuvre lorsque seul un certain nombre de points de repère (17, 18) qui ne sont pas associés à un motif de points de repères et qui sont inférieurs à une valeur de seuil prédéfinie peuvent être détectés par l'unité de détection (13).

15. Système électronique de localisation autonome (12) d'un véhicule (5), qui comporte au moins une unité de détection (13) destinée à détecter l'environnement (15) du véhicule (5) et une unité d'évaluation (14) destinée à évaluer les informations détectées, le système de localisation autonome (12) étant destiné à mettre en œuvre un procédé de détermination d'un type d'utilisation d'un motif de points de repère (10) destiné à une localisation autonome du véhicule (5), le motif de points de repère (10) étant disposé dans la zone environnante (15) du véhicule (5), et qui comporte de multiples parties de points de repère identiques (11a à 11e) afin de former le motif de points de repère (10), les étapes suivantes étant effectuées :
- fourniture d'une carte numérique de la région environnante (15) comprenant le motif de points de repère (10) ;
- détection de la zone environnante (15) au moyen d'au moins une unité de détection (12) du véhicule (5) ;
- analyse des informations détectées pour déterminer si au moins une partie de point de repère (11a à 11e) du motif de points de repère (10) a été détectée ;
- si une partie de point de repère (11a à 11e) a été détectée, réalisation d'une tentative d'association de cette partie de point de repère (11a à 11e) à la partie de point de repère correspondante dans la carte numérique ;
- utilisation du motif de points de repère (10) pour la localisation autonome du véhicule (5) selon un premier type d'utilisation si une association unique de la partie de point de repère détectée (11a à 11e) à la partie de point de repère correspondante dans la carte numérique a réussi, **caractérisé par** :
- l'utilisation du motif de points de repère (10) pour la localisation autonome du véhicule (5) selon un second type d'utilisation différent du premier type d'utilisation si une association unique de la partie de point de repère détectée (11a à 11e) à la partie de point de repère correspondante dans la carte numérique n'a pas réussi.
